# EUROPEAN PATENT APPLICATION

(11) **EP 4 576 545 A1**
(43) Date of publication of application: **25.06.2025**
(21) Application number: 23891514.4
(22) Date of filing: 13.11.2023
(51) Int. Cl.: H02M 7/48, B60H 1/22, B60K 11/02, B60L 1/00, B60L 9/18, B60L 50/60, B60L 53/14, B60L 58/10, F25B 1/00, F25B 43/00, H02K 11/33

(54) **VEHICLE DRIVE DEVICE**

(30) Priority: 16.11.2022 JP 2022183372
(71) Applicant: AISIN CORPORATION, Kariya-shi, Aichi 448-8650 (JP)
(72) Inventor: MAEDA, Takuyo, Kariya-shi, Aichi 448-8650 (JP); KUROKAWA, Akifumi, Kariya-shi, Aichi 448-8650 (JP); KOSHIDA, Takafumi, Kariya-shi, Aichi 448-8650 (JP); YAMASHITA, Mitsugi, Kariya-shi, Aichi 448-8650 (JP); NITTA, Masaru, Kariya-shi, Aichi 448-8650 (JP); TAKAHASHI, Mitsuru, Kariya-shi, Aichi 448-8650 (JP); ONOZAWA, Satoru, Kariya-shi, Aichi 448-8650 (JP); MANABE, Takashi, Kariya-shi, Aichi 448-8650 (JP); MURAKAMI, Satoshi, Kariya-shi, Aichi 448-8650 (JP)
(74) Representative: Kramer Barske Schmidtchen Patentanwälte PartG mbB
(86) International application number: PCT/JP2023/040705
(87) International publication number: WO 2024/106367

(57) **Abstract**

A vehicle drive device (100) includes a rotary electric machine (MG), a power transmission mechanism (GT), an inverter module (INV) configured to control drive of the rotary electric machine (MG), a power supply module (PWR) electrically connected to an onboard battery, a refrigerant circuit module (2) that defines at least part of a refrigerant circuit (20) through which a refrigerant for an onboard air conditioner circulates, and a case (9) including a first housing chamber (E1) that houses the inverter module (INV) and a second housing chamber (E2) that houses the rotary electric machine (MG) and the power transmission mechanism (GT). The power supply module (PWR) and the refrigerant circuit module (2) are attached to the case (9).

## Description

### TECHNICAL FIELD

The present invention relates to a vehicle drive device.

### BACKGROUND ART

Japanese Unexamined Patent Application Publication No. 2019-170077 (JP 2019-170077 A) discloses a vehicle drive device (1) including a rotary electric machine (rotor (20), stator (30)) serving as a driving force source for wheels (803, 804), a drive control device (131) that controls drive of the rotary electric machine, a charger (136) that charges a battery (805) connected to the rotary electric machine via the drive control device (131) with electric power supplied from an external power supply (900), and a case (10) that houses the rotary electric machine, the drive control device (131), and the charger (136) (signs in parentheses in the background art are those in the referenced document). The case (10) has a first housing chamber that houses the rotary electric machine on a lower side in an up-down direction (Z) in an onboard posture in which the vehicle drive device (1) is mounted on a vehicle, and a second housing chamber that houses the drive control device (131) and the charger (136) on an upper side in the up-down direction (Z). The first housing chamber is formed on the inner side of a cylindrical peripheral wall portion (10b) of the case (10). The second housing chamber is formed as a rectangular box-shaped space on the inner side of a square tube portion (10e) having a square tube shape and adjacent to the upper side of the peripheral wall portion (10b) in the up-down direction (Z) on the radially outer side of the peripheral wall portion (10b). Further, in the peripheral wall portion (10b), a cooling portion (60) is formed. In the cooling portion (60), a cooling channel through which a refrigerant flows is formed along the peripheral wall portion (10b).

The cooling channel formed along the peripheral wall portion (10b) has, on the side of the square tube portion (10e), an inlet (16) through which the refrigerant flows in and an outlet (17) through which the refrigerant flows out. The drive control device (131) is disposed near the inlet (16) of the refrigerant channel, that is, on the upstream side of the refrigerant channel, and the charger (136) is disposed near the outlet (17) of the refrigerant channel, that is, on the downstream side of the refrigerant channel. Therefore, the drive control device (131) that generates heat when the rotary electric machine is driven can efficiently be cooled by the cold refrigerant. The battery (805) is charged by the external power supply (900) while the vehicle is stopped. Therefore, it is unlikely that the temperature of the refrigerant increases by heat exchange with the drive control device (131). Thus, the charger (136) is appropriately cooled even though it is disposed on the downstream side of the refrigerant channel. A reactor (140) and a smoothing capacitor (141) to be used for improving the power factor of an electric power system and stabilizing the voltage are also disposed along the refrigerant channel and are appropriately cooled by the refrigerant.

### Related Art Documents

### Patent Documents

Patent Document 1: Japanese Unexamined Patent Application Publication No. 2019-170077 (JP 2019-170077 A)

### SUMMARY OF THE INVENTION

### Problem to be Solved by the Invention

As described above, the vehicle drive device disclosed in the above document includes the cooling structure that can efficiently cool a plurality of cooling targets. However, the vehicle includes other devices to be subjected to thermal management, such as an air conditioner. As the weight of the vehicle decreases, the energy efficiency of the vehicle increases more easily. Further, appropriate heat utilization and waste heat management contribute to improving the energy efficiency of the vehicle. Therefore, it is preferable to downsize the vehicle drive device having a relatively large proportion in terms of weight among the onboard devices, and to perform more comprehensive thermal management of the onboard devices by utilizing the vehicle drive device.

In view of the above background, it is desirable to provide a technology for appropriately configuring a thermal management system in a vehicle with a vehicle drive device as the core, and for downsizing the vehicle drive device.

### Means for Solving the Problem

In view of the above, a vehicle drive device includes: a rotary electric machine including a rotor; an output member drivingly connected to a wheel; a power transmission mechanism configured to transmit a driving force between the rotary electric machine and the output member; an inverter module configured to control drive of the rotary electric machine; a power supply module electrically connected to an onboard battery; a refrigerant circuit module that defines at least part of a refrigerant circuit through which a refrigerant for an onboard air conditioner circulates; and a case including a first housing chamber that houses the inverter module and a second housing chamber that houses the rotary electric machine and the power transmission mechanism. The power supply module and the refrigerant circuit module are attached to the case.

In this configuration, in the vehicle drive device, the inverter module that controls the drive of the rotary electric machine is provided integrally to the drive unit including the rotary electric machine and the power transmission mechanism, and the power supply module and the refrigerant circuit module for the onboard air conditioner are provided integrally to the drive unit. Therefore, it is possible to reduce the number of wires, pipes, etc. connecting the drive unit and the inverter module to the power supply module and the refrigerant circuit module. Further, it is easy to downsize the entire vehicle drive device with many functions by integrating the case that houses these components. With this configuration, it is possible to appropriately configure the thermal management system in the vehicle with the vehicle drive device as the core, and to downsize the vehicle drive device.

Further features and advantages of the vehicle drive device will become apparent from the following description of an exemplary and non-limiting embodiment that will be given with reference to the drawings.

### BRIEF DESCRIPTION OF THE DRAWINGS

[FIG. 1] FIG. 1 is an exploded perspective view of a vehicle drive device.
[FIG. 2] FIG. 2 is a skeleton diagram of the vehicle drive device.
[FIG. 3] FIG. 3 is a schematic control block diagram of the vehicle drive device.
[FIG. 4] FIG. 4 is a diagram schematically showing a refrigerant circuit and a coolant circuit.
[FIG. 5] FIG. 5 is a front-side elevation of the vehicle drive device from a first front-rear side.
[FIG. 6] FIG. 6 is a rear-side elevation of the vehicle drive device from a second front-rear side.
[FIG. 7] FIG. 7 is a side view of the vehicle drive device from a second axial side.
[FIG. 8] FIG. 8 is a perspective view schematically showing a disposition relationship of a cooling unit, an inverter module, and a power supply module.
[FIG. 9] FIG. 9 is a diagram schematically showing an example of a route of a refrigerant in a refrigerant manifold.

### MODES FOR CARRYING OUT THE INVENTION

An embodiment of a vehicle drive device will be described below with reference to the drawings. A vehicle drive device 100 of the present embodiment appropriately configures a thermal management system in a vehicle with the vehicle drive device 100 as the core while suppressing an increase in size. For example, small-size vehicles such as A-Segment vehicles in Europe and light cars in Japan require minimization of the sizes and weights of onboard components, including the vehicle drive device 100, to improve mounting efficiency. For example, it is preferable to reduce the lengths of connection components such as wires and pipes by disposing onboard components close to each other, or to reduce the number of wires and pipes by integrating different devices. From the standpoint of cost and energy efficiency, it is effective to reduce the sizes and weights of vehicles larger than A-Segment vehicles and light cars.

A radiator dissipates heat of a coolant for cooling heat-generating devices in a vehicle, such as a driving force source for wheels. The radiator is generally disposed at the foremost part of the vehicle to dissipate heat using traveling wind. In order to secure a cabin space for occupants, small-size vehicles such as A-Segment vehicles are often front-wheel drive, and the driving force source for the wheels is also disposed at the front of each vehicle. In a vehicle including an air conditioner (onboard air conditioner) that performs cooling, heating, etc., the air conditioner, most of the channels through which a refrigerant for use in the air conditioner flows, and functional components that perform heat exchange are also disposed at the front of the vehicle. Regarding heating in particular, in conventional vehicles using an internal combustion engine as a driving force source for wheels, it is easy to use the internal combustion engine as a heat source. However, vehicles such as electric vehicles without an internal combustion engine have no such heat source. Therefore, only a heat pump system is used for heating. Compared to the system using waste heat from an internal combustion engine, the number of mounted components tends to increase. By appropriately piping and wiring the onboard components in the limited space at the front of the vehicle, it is possible to widen the available space for the vehicle cabin etc. The vehicle drive device 100 of the present embodiment achieves comprehensive reduction in sizes, weights, and costs of onboard components by integrating, with the vehicle drive device 100, functional components that perform thermal management using a coolant and a refrigerant.

A preferred embodiment of the vehicle drive device 100 will be described below. First, the function as a drive unit for driving wheels W will be described.

In the present specification, the term "drivingly connected" refers to a state in which two rotary elements are connected so that a driving force can be transmitted, and includes a state in which the two rotary elements are connected so as to rotate integrally or a state in which the two rotary elements are connected so that a driving force can be transmitted via one, two, or more transmission members. Such transmission members include various members that transmit rotation at the same speed or at a shifted speed, such as a shaft, a gear mechanism, a belt, and a chain. The transmission members may include an engagement device that selectively transmits rotation and a driving force, such as a friction engagement device and an intermesh engagement device. When the term "drivingly connected" is used for rotary elements in a planetary gear mechanism, it refers to a state in which the plurality of rotary elements in the planetary gear mechanism is connected to each other via no other rotary elements. In the present specification, the term "integrally rotate" refers to integral rotation regardless of whether components are separable. That is, a plurality of members that rotates integrally may be formed integrally from the same member, or separate members may be integrated by welding, spline connection, etc. In the present specification, regarding the disposition of two elements, the phrase "overlap when viewed in a specific direction" means that, when a virtual straight line parallel to the line-of-sight direction is moved in directions orthogonal to the virtual straight line, an area where the virtual straight line intersects both the two elements is present at least in part.

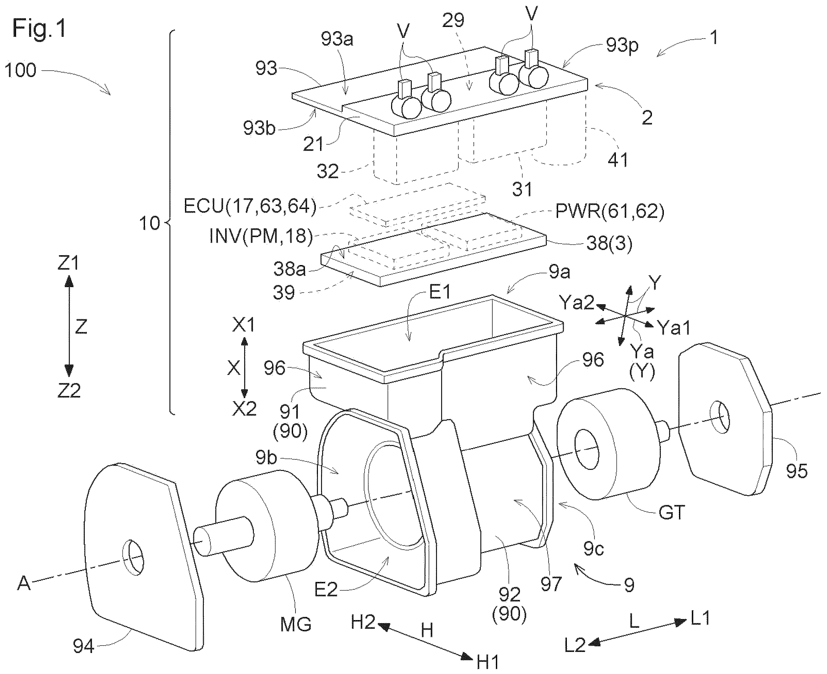

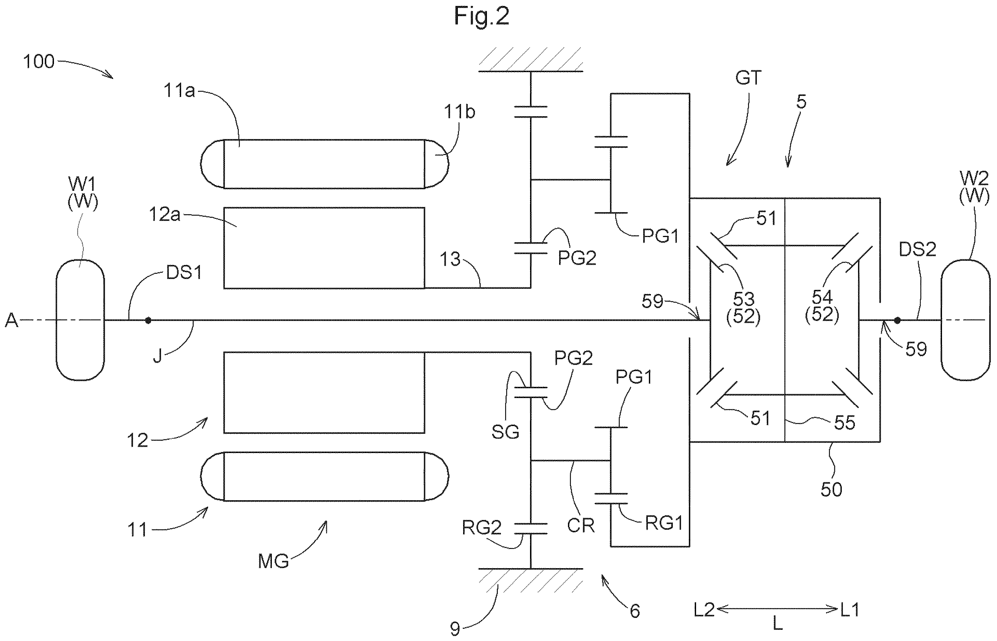

As shown in the exploded perspective view of FIG. 1 and the skeleton diagram of FIG. 2, the vehicle drive device 100 includes a rotary electric machine MG including a rotor 12, output members drivingly connected to the wheels W, and a power transmission mechanism GT that transmits a driving force between the rotary electric machine MG and the output members. As described later, a direction along a rotation axis A of the rotor 12 will be referred to as "axial direction L." The power transmission mechanism GT is disposed on a first axial side L1 that is one side of the rotor 12 in the axial direction L. Although details will be described later, the rotary electric machine MG is a driving force source for the vehicle, and the power transmission mechanism GT includes a speed reducer 6 and a differential gear mechanism 5. Specifically, the vehicle drive device 100 includes the rotary electric machine MG including the rotor 12, a pair of output members drivingly connected to the wheels W, the speed reducer 6 that reduces the speed of rotation of a rotor shaft 13, the differential gear mechanism 5 that distributes, to the pair of output members, a driving force transmitted from the rotary electric machine MG to a differential input element (differential case 50) via the speed reducer 6, and a case 9 that defines a housing chamber (second housing chamber E2 described later) that houses the rotary electric machine MG, the speed reducer 6, and the differential gear mechanism 5.

The pair of wheels W includes a first wheel W1 and a second wheel W2. The first wheel W1 is drivingly connected to a first drive shaft DS1. The second wheel W2 is drivingly connected to a second drive shaft DS2. In the present embodiment, a pair of side gears 52 that is output gears of the differential gear mechanism 5 includes a first side gear 53 and a second side gear 54. The first side gear 53 is drivingly connected to the first drive shaft DS1 via a connecting shaft J. The second side gear 54 is drivingly connected to the second drive shaft DS2. For example, the first side gear 53 and the connecting shaft J are connected by spline connection, and the second side gear 54 and the second drive shaft DS2 are also connected by spline connection. These connection portions are spline engagement portions 59. The output members are, for example, the spline engagement portions 59. The output members may also be the first side gear 53, the second side gear 54, the first drive shaft DS1, the second drive shaft DS2, and the connecting shaft J.

In the following description, the direction along the rotation axis A of the rotor 12 will be referred to as "axial direction L" as described above. One side in the axial direction L will be referred to as "first axial side L1" and the other side in the axial direction L will be referred to as "second axial side L2." In the present embodiment, the rotary electric machine MG, the speed reducer 6, and the differential gear mechanism 5 are disposed coaxially with one another in this order from the second axial side L2 to the first axial side L1. The vehicle drive device 100 of the present embodiment has a single-axis configuration. The axis on which the rotary electric machine MG, the speed reducer 6, and the differential gear mechanism 5 are disposed is the rotation axis A of the vehicle drive device 100 and also the rotation axes of the rotary electric machine MG, the speed reducer 6, and the differential gear mechanism 5. A direction orthogonal to the rotation axis A of the rotor 12 will be referred to as "radial direction." In the radial direction, the rotation axis A side of the rotor 12 will be referred to as "radially inner side" and the opposite side will be referred to as "radially outer side." In an onboard state in which the vehicle drive device 100 is mounted on the vehicle, a direction along the vertical direction will be referred to as "up-down direction Z," an upper side will be referred to as "upper side Z1 in the up-down direction Z," and a lower side will be referred to as "lower side Z2 in the up-down direction Z." When the vehicle drive device 100 is mounted horizontally on the vehicle, one of the radial directions coincides with the up-down direction Z. A direction orthogonal to the axial direction L and the up-down direction Z will be referred to as "front-rear direction H." One side in the front-rear direction H will be referred to as "first front-rear side H1" and the other side will be referred to as "second front-rear side H2."

In the present embodiment, regardless of whether the vehicle drive device 100 is in the onboard state, an "opening direction X," "opening plane directions Y," and a "specific opening plane direction Ya (first direction)" are defined based on the vehicle drive device 100 as described later. The "opening plane directions Y" are directions orthogonal to the "opening direction X." The "specific opening plane direction Ya" is one specific direction out of the "opening plane directions Y" and corresponds to the "first direction." In the onboard state, the "opening direction X" coincides with the "up-down direction Z" and the "specific opening plane direction Ya" coincides with the "front-rear direction H." An "opening-direction first side X1" that is one side in the "opening direction X" coincides with the "upper side Z1 in the up-down direction Z" and an "opening-direction second side X2" that is the other side coincides with the "lower side Z2 in the up-down direction Z." A "specific opening plane direction first side Ya1 (first-direction first side)" that is one side in the "specific opening plane direction Ya (first direction)" coincides with the "first front-rear side H1" and a "specific opening plane direction second side Ya2 (first-direction second side)" that is the other side coincides with the "second front-rear side H2."

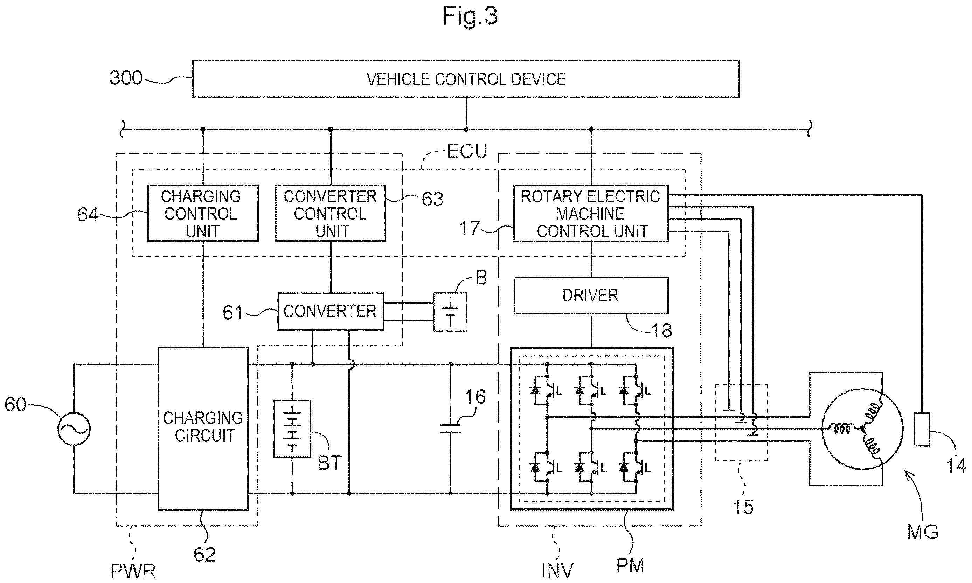

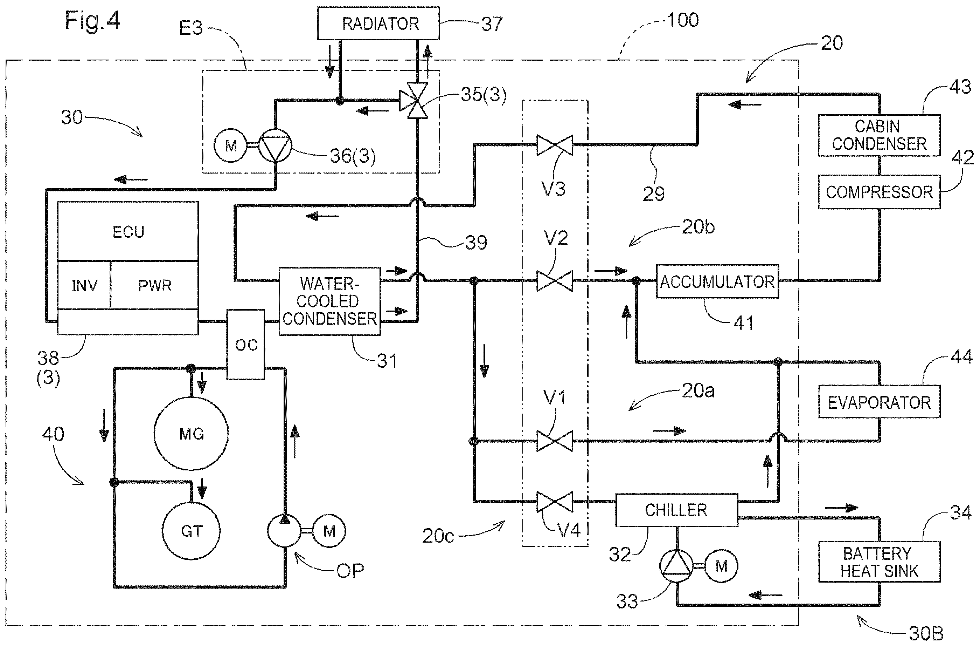

As shown in FIGS. 1 and 3, the vehicle drive device 100 further includes an inverter module INV electrically connected to an onboard battery BT to control drive of the rotary electric machine MG, a power supply module PWR electrically connected to the onboard battery BT, and a refrigerant circuit module 2 that defines at least part of a refrigerant circuit 20 (see FIG. 4) through which a refrigerant for an air conditioner (onboard air conditioner) circulates. The power supply module PWR includes, for example, at least one of a converter 61 (voltage conversion circuit) that converts a voltage of the onboard battery BT, a charging circuit 62 for charging the onboard battery BT from an external power supply 60, and a power supply circuit for supplying electric power from the onboard battery BT to the outside. The case 9 includes a first housing chamber E1 that houses the inverter module INV and the power supply module PWR, and a second housing chamber E2 that houses the rotary electric machine MG and the power transmission mechanism GT.

As shown in FIG. 1, the case 9 includes a case body 90 that is a core housing member for the first housing chamber E1 and the second housing chamber E2, and three cover members (first cover 93, second cover 94, third cover 95). The case body 90 includes a first case portion 91 and a second case portion 92. The first case portion 91 is a portion where the first housing chamber E1 that houses the inverter module INV and the power supply module PWR is formed. The second case portion 92 is a portion where the second housing chamber E2 that houses the rotary electric machine MG and the power transmission mechanism GT is formed. In terms of the function as the drive unit for the wheels W, the power supply module PWR need not be mounted on the vehicle drive device 100. In this case, the first case portion 91 may be regarded as a case that houses the inverter module INV. The first housing chamber E1 is disposed on the upper side Z1 in the up-down direction Z with respect to the rotary electric machine MG, and houses at least the inverter module INV

The present embodiment illustrates the configuration in which the first case portion 91 and the second case portion 92 are formed integrally from the same member, but the structure of the case 9 is not limited to this. The case 9 may have a configuration in which the first case portion 91 and the second case portion 92 are formed from separate members and are integrated together by fastening members such as bolts, welding, etc.

The first case portion 91 has a rectangular box shape that is open on the upper side Z1 in the up-down direction Z in the onboard state. A direction orthogonal to an opening plane of a first opening 9a that is an opening of the first case portion 91 will be referred to as "opening direction X." The first case portion 91 includes a peripheral wall portion 96 disposed so as to surround the first opening 9a and extend along the opening direction X that coincides with the up-down direction Z in the onboard state. The first opening 9a is closed by the first cover 93. The first opening 9a corresponds to an opening of the case 9 (first case portion 91) that houses the inverter module INV. The first cover 93 corresponds to a cover that closes this opening (first opening 9a). The first housing chamber E1 and the second housing chamber E2 are arranged in the opening direction X.

The second case portion 92 has a tubular shape that is open on both sides in the axial direction L, and includes a tubular peripheral wall portion 97 having a cylindrical shape. The tubular peripheral wall portion 97 surrounds the power transmission mechanism GT from the radially outer side, and corresponds to a portion surrounding the second housing chamber E2 of the case 9. The opening formed on the second axial side L2 is a second opening 9b. The opening formed on the first axial side L1 is a third opening 9c. The second opening 9b is closed by the second cover 94. The third opening 9c is closed by the third cover 95. The second cover 94 and the third cover 95 have through holes through which the above drive shafts (first drive shaft DS1, second drive shaft DS2) extend.

The rotary electric machine MG functions as a driving force source for the pair of wheels W. As shown in FIG. 3, the rotary electric machine MG is electrically connected, via an inverter circuit PM, to the onboard battery BT that is a direct current power supply structured by a power storage device such as a secondary battery or a capacitor. The rotary electric machine MG has a function as a motor (electric motor) supplied with electric power from the onboard battery BT to generate driving power, and a function as a generator (electric generator) supplied with driving power from the wheels W to generate electric power. The rotary electric machine MG performs power running with electric power stored in the onboard battery BT to generate a driving force, and generates electric power using a driving force transmitted from the pair of wheels W to charge the onboard battery BT. The onboard battery BT is a high-voltage direct current power supply with a rated voltage of about 48 volts to 400 volts.

In the present embodiment, the onboard battery BT is chargeable not only with electric power generated by the rotary electric machine MG but also with electric power supplied from the external power supply 60 such as an alternating current commercial power supply rated at about 100 volts to 240 volts. Therefore, the onboard battery BT is connectable to the external power supply 60 via the charging circuit 62. The charging circuit 62 is an onboard device called, for example, "onboard charger." FIG. 3 illustrates a configuration in which the external power supply 60 and the charging circuit 62 are connected, for example, by wires via a connector, but the present invention is not limited to this. For example, electric power may be supplied from the external power supply 60 to the charging circuit 62 in a non-contact manner by electromagnetic induction etc. A charging control unit 64 is provided to control the charging circuit 62.

In recent years, it has been proposed to use the onboard battery BT of an electric vehicle or a hybrid vehicle as an emergency power supply in the event of a disaster etc. The charging circuit 62 has a power supply function in addition to the charging function so that the onboard battery BT can be used as the emergency power supply. For example, it is preferable that the onboard charger include a power conversion circuit that can perform bidirectional power supply including power supply from the external power supply 60 to the onboard battery BT and power supply from the onboard battery BT to the external power supply 60. In this case, the onboard charger can be regarded as both the charging circuit 62 and the power supply circuit. If the use of the onboard battery BT is not taken into consideration, the onboard charger may be structured as the charging circuit 62 having only the function of charging the onboard battery BT.

In the present embodiment, the onboard battery BT also supplies electric power to a low-voltage direct current power supply B with a rated voltage of about 12 volts to 24 volts. The low-voltage direct current power supply B serves as a power supply for auxiliary devices such as headlights, power windows, power steering, an air conditioner, and an electric oil pump of the vehicle, and as a power supply for various control devices in the vehicle. Conventionally, in a typical vehicle, the low-voltage direct current power supply B is charged with electric power generated by an alternator that is linked to a driving force source (e.g., an internal combustion engine) of the vehicle. In the present embodiment, the low-voltage direct current power supply B is charged with electric power from the onboard battery BT (high-voltage direct current power supply) that has a higher voltage and a larger power storage amount than the low-voltage direct current power supply B. This can eliminate the need for the alternator, and also reduce power loss in the driving force source of the vehicle (rotary electric machine MG in the present embodiment) along with the drive of the alternator.

The converter 61 (voltage conversion circuit) that converts the voltage of the onboard battery BT is provided to charge the low-voltage direct current power supply B with the electric power of the onboard battery BT. As described above, the rated voltage of the onboard battery BT is higher than the rated voltage of the low-voltage direct current power supply. Therefore, the converter 61 is, for example, a step-down DC-DC converter. DC-DC converters are classified into non-insulated types such as chopper types and charge pump types, and insulated types that use a transformer. If it is preferable that the circuit supplied with electric power from the onboard battery BT and the circuit supplied with electric power from the low-voltage direct current power supply B be electrically insulated, the converter 61 may be of an insulated type. The insulated DC-DC converter includes switching elements. The converter 61 is controlled by a converter control unit 63.

In some vehicles, an AC power socket (alternating current power socket) for supplying alternating current power with a rated voltage of 100 volts to 200 volts to general home appliances etc. is provided inside the vehicle cabin (including a luggage compartment). The alternating current power supplied from the AC power socket may be generated from the onboard battery BT using an unillustrated inverter different from the above onboard charger. Such an inverter also corresponds to the voltage conversion circuit. When the inverter is provided, the inverter and an inverter control unit that controls the inverter can also be included in the power supply module PWR.

Thus, the power supply module PWR is electrically connected to the onboard battery BT, and includes the converter 61 (voltage conversion circuit) that converts the voltage of the onboard battery BT, and the charging circuit 62 that charges the onboard battery BT from the external power supply 60. In the present embodiment, the charging control unit 64 and the converter control unit 63 are also included in the power supply module PWR.

As shown in FIG. 2, the rotary electric machine MG includes a stator 11 fixed to the case 9, and the rotor 12 connected to the rotor shaft 13 so as to rotate integrally with the rotor shaft 13. The rotary electric machine MG is an inner rotor type rotary electric machine, and the rotor 12 is disposed on the radially inner side of the stator 11. The rotary electric machine MG is a revolving field type rotary electric machine. The stator 11 includes a stator core 11a and a stator coil 11b wound around the stator core 11a. The rotor 12 includes a rotor core 12a and unillustrated permanent magnets fixed to the rotor core 12a. The rotor shaft 13 has a tubular shape coaxial with the rotor core 12a. A sun gear SG of the planetary gear mechanism constituting the speed reducer 6 is disposed on the outer circumferential side of the rotor shaft 13 on the first axial side L1 so as to rotate integrally with the rotor shaft 13. As described later, the sun gear SG is an input element of the speed reducer 6.

As shown in FIG. 3, the drive of the rotary electric machine MG is controlled by a rotary electric machine control unit 17 based on a target torque of the rotary electric machine MG that is set according to a command from a vehicle control device 300 that is a higher-level control device. The rotary electric machine control unit 17 controls the switching of the inverter circuit PM including the plurality of switching elements to cause the inverter circuit PM to convert electric power between direct current and multi-phase (three-phase in the present embodiment) alternating current. The operating voltage of the rotary electric machine control unit 17 is about 3.3 volts to 5 volts. The input-output voltage of the inverter circuit PM is about 48 volts to 400 volts. The voltage of a switching control signal for the switching elements constituting the inverter circuit PM is about 15 volts to 24 volts. Therefore, a driver 18 that amplifies the voltage of the switching control signal output from the rotary electric machine control unit 17 and supplies it to the inverter circuit PM to increase the driving force is provided between the rotary electric machine control unit 17 and the inverter circuit PM.

The inverter circuit PM including the plurality of switching elements includes a plurality of sets (three sets in this case) of arms for respective alternating current phases each structured by a series circuit of an upper switching element on a positive side of direct current and a lower switching element on a negative side. Each switching element is provided with a freewheeling diode with its forward direction being a direction from the negative electrode to the positive electrode (from the lower stage to the upper stage). It is preferable that a power semiconductor element such as an IGBT (Insulated Gate Bipolar Transistor), a power MOSFET (Metal Oxide Semiconductor Field Effect Transistor), a SiC-MOSFET (Silicon Carbide-Metal Oxide Semiconductor FET), a SiC-SIT (SiC-Static Induction Transistor), and a GaN-MOSFET (Gallium Nitride-MOSFET) be applied to the switching elements. In the present embodiment, the inverter circuit PM is structured as a power module in which the switching elements are integrated together with the freewheeling diodes.

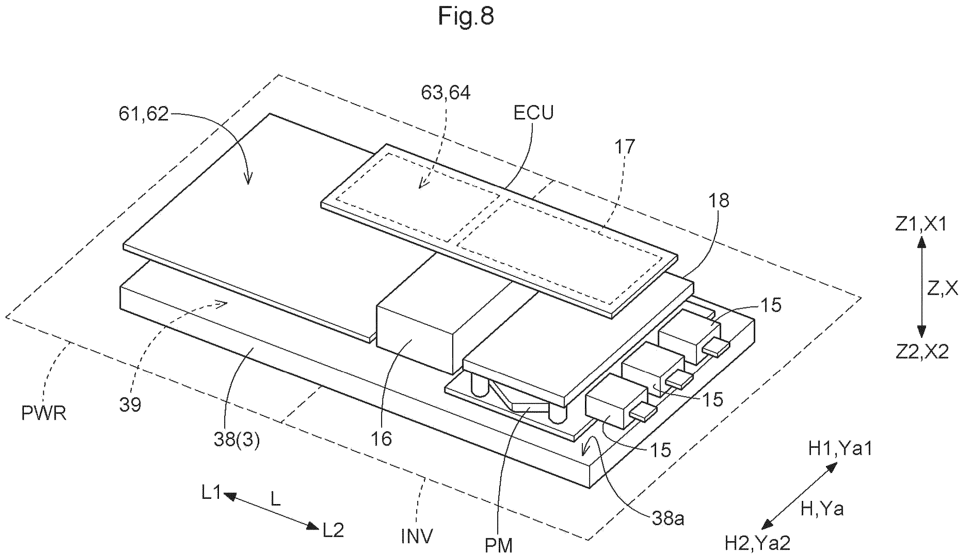

When the rotary electric machine MG is driven, a large current flows through the switching elements constituting the inverter circuit PM, and the switching elements generate heat. Therefore, a large amount of heat is generated by the inverter circuit PM including the plurality of switching elements. For this reason, in the present embodiment, a cooling unit 38 that cools the switching elements is provided as shown in FIG. 8. As described later, the cooling unit 38 has a coolant channel 39 through which a coolant flows.

In the present embodiment, the inverter module INV includes at least the switching elements constituting the inverter circuit PM, and the cooling unit 38 that cools the switching elements. In the present embodiment, as shown in FIG. 3, the inverter module INV further includes the rotary electric machine control unit 17 and the driver 18. That is, in the present embodiment, the inverter module INV includes the rotary electric machine control unit 17, the driver 18, the inverter circuit PM, and the cooling unit 38. The inverter module INV may be configured by the switching elements constituting the inverter circuit PM and the cooling unit 38 without including the rotary electric machine control unit 17 and the driver 18.

As shown in FIG. 3, a direct current link capacitor 16 (smoothing capacitor) that smooths the voltage on the direct current side of the inverter circuit PM is provided on the direct current side of the inverter circuit PM, that is, between the inverter circuit PM and the onboard battery BT. The inverter module INV may include the direct current link capacitor 16.

The rotary electric machine control unit 17 controls the drive of the rotary electric machine MG via the inverter circuit PM by performing current feedback control based on the rotational position of the rotor 12 (magnetic pole position of the permanent magnet), the rotational speed of the rotor 12, and the current flowing through each of the three-phase stator coils 11b. The current flowing through the stator coil 11b is detected by a current sensor 15. As shown in FIG. 8, for example, the current sensor 15 is preferably a non-contact current sensor disposed near a power line such as a busbar connecting the inverter circuit PM and the stator coil 11b of the rotary electric machine MG.

In the present embodiment, the power supply module PWR includes at least the converter 61 (voltage conversion circuit) and the charging circuit 62. In the present embodiment, as shown in FIG. 8, the converter 61 and the charging circuit 62 are configured using a common board. In the present embodiment, the power supply module PWR includes the converter 61, the converter control unit 63, the charging circuit 62, and the charging control unit 64 as shown in FIG. 3.

In the present embodiment, the rotary electric machine control unit 17 included in the inverter module INV and the converter control unit 63 and the charging control unit 64 included in the power supply module PWR are formed on the same single board to form a control board ECU. The control board ECU may also be called an integrated control board in which the functions of the plurality of control units are integrated.

In the present embodiment, as shown in FIG. 8, the inverter circuit PM (switching elements), the direct current link capacitor 16, the converter 61, and the charging circuit 62 are attached to a first cooling unit surface 38a that is the upper surface of the cooling unit 38. The direct current link capacitor 16 that smooths a direct current voltage causing pulsation generates heat due to the flow of a current therethrough. The converter 61 includes a switching element, and the switching element also generates heat due to a current that flows during a switching operation. The charging circuit 62 also generates heat because a current supplied from the external power supply 60 to charge the onboard battery BT flows through the charging circuit 62. The cooling unit 38 has the coolant channel 39 through which the coolant flows. These heat-generating components are appropriately cooled by being attached to the first cooling unit surface 38a. The inverter circuit PM generates the largest amount of heat and reaches the highest temperature.

For example, the coolant channel 39 is formed inside the cooling unit 38 so that a portion that cools the inverter circuit PM is located on the downstream side, that is, the coolant flows from the power supply module PWR side to the inverter module INV side. By circulating the coolant from an area with a small heat generation amount to an area with a large heat generation amount, the heat-generating cooling targets can appropriately be cooled while suppressing an increase in the temperature of the coolant. When the rotary electric machine MG is being driven, that is, when the vehicle is traveling, it is unlikely that the onboard battery BT is charged from the external power supply 60. Although the vehicle traveling on a road may be supplied with electric power in a non-contact manner from a power supply device installed on the road, this system has not been in practical use. Therefore, when the rotary electric machine MG is being driven, the charging circuit 62 is often stopped. The current that flows when charging the low-voltage direct current power supply B is smaller than the current that flows through the charging circuit 62 when charging the onboard battery BT, and the heat generation amount is also smaller. Therefore, even when the low-voltage direct current power supply B is charged while the rotary electric machine MG is being driven, the amount of heat generated by the converter 61 is smaller than that by the charging circuit 62. Thus, the inverter circuit PM can appropriately be cooled even when the coolant flows along such a route.

The driver 18 is disposed on the upper side Z1 in the up-down direction Z (opening-direction first side X1) with respect to the inverter circuit PM. The control board ECU is disposed across the rotary electric machine control unit 17, the converter control unit 63, and the charging control unit 64. The control board ECU is disposed so that, approximately in an up-down direction view (opening-direction view), the inverter circuit PM, the driver 18, and the rotary electric machine control unit 17 overlap each other, the converter 61 and the converter control unit 63 overlap each other, and the charging circuit 62 and the charging control unit 64 overlap each other. In the present embodiment, as shown in FIGS. 1, 8, etc., the power supply module PWR is disposed to adjoin the inverter module INV on the first axial side L1. The control board ECU is disposed across the rotary electric machine control unit 17, the converter control unit 63, and the charging control unit 64 along the axial direction L. As shown in FIG. 1, the control board ECU is disposed between the inverter circuit PM (switching elements) and the refrigerant circuit module 2 in the up-down direction Z.

As shown in FIG. 2, the speed reducer 6 is structured as a planetary gear mechanism including an input element that rotates integrally with the rotor shaft 13, a fixed element fixed to the case 9, an output element that rotates integrally with the differential input element (differential case 50), and a planetary gear. This planetary gear mechanism is a complex planetary gear mechanism including one sun gear SG, two ring gears (first ring gear RG1, second ring gear RG2), two sets of planetary gears (first planetary gears PG1, second planetary gears PG2) that rotate integrally, and a carrier CR that rotatably supports the two sets of planetary gears. In the present embodiment, the first planetary gear PG1 has a smaller diameter than the second planetary gear PG2.

The sun gear SG rotates integrally with the rotor 12 and the rotor shaft 13. The second ring gear RG2 is fixed to the case 9. The first ring gear RG1 is disposed on the first axial side L1 with respect to the second ring gear RG2, and is connected to the differential case 50 so as to rotate integrally with the differential case 50. The second planetary gears PG2 mesh with the sun gear SG and the second ring gear RG2. The first planetary gears PG1 rotate integrally with the second planetary gears PG2 and mesh with the first ring gear RG1. In the present embodiment, the sun gear SG is the input element, the second ring gear RG2 is the fixed element, and the first ring gear RG1 is the output element. The carrier CR is not connected to any rotary element or any fixed element.

The differential gear mechanism 5 is a bevel gear type differential gear mechanism, and includes pinion gears 51 and the side gears 52 that are bevel gears. The pinion gears 51 are rotatably supported by pinion shafts 55 that are supported by the differential case 50 and disposed so as to extend along the radial direction. The pinion shaft 55 rotates integrally with the differential case 50, and the pinion gear 51 is rotatable (spinnable) about the pinion shaft 55 and rotatable (revolvable) about the rotation axis A of the differential case 50. The plurality of pinion shafts 55 is disposed radially (e.g., in a cross shape) about the rotation axis A of the differential case 50, and the pinion gears 51 are attached to the plurality of pinion shafts 55. The differential case 50 houses the pinion gears 51, the side gears 52, and the pinion shafts 55.

The side gears 52 include the first side gear 53 and the second side gear 54, and are disposed in pairs away from each other in the axial direction L. The first side gear 53 and the second side gear 54 are disposed so as to mesh with the plurality of pinion gears 51 and rotate about the rotation axis A of the differential case 50. As shown in FIG. 2, the first side gear 53 is connected to the connecting shaft J extending along the axial direction L through the speed reducer 6 and the radially inner side of the hollow tubular rotor shaft 13. The connecting shaft J is connected to the first drive shaft DS1 drivingly connected to the first wheel W1 that is the wheel W on the second axial side L2 so as to rotate integrally with the first drive shaft DS1. Therefore, the first side gear 53 is drivingly connected to the first wheel W1 via the connecting shaft J. The second side gear 54 is connected to the second drive shaft DS2 drivingly connected to the second wheel W2 that is the wheel W on the first axial side L1 so as to rotate integrally with the second drive shaft DS2.

The first drive shaft DS1, the second drive shaft DS2, the connecting shaft J, the first side gear 53, and the second side gear 54 that are drivingly connected to the wheels W and rotate integrally with the wheels W can be regarded as rotary members corresponding to the output members. The first side gear 53 and the second side gear 54 can be regarded as the differential gear mechanism 5 and also as the output members. Each of the first side gear 53 and the second side gear 54 includes a gear portion that meshes with the pinion gear 51, and the spline engagement portion 59 connected to the connecting shaft J or the second drive shaft DS2. When considered separately in terms of functions, the gear portion corresponds to a rotary member included in the differential gear mechanism 5, and the spline engagement portion 59 corresponds to the output member.

In the vehicle drive device 100, the rotary electric machine MG and the power transmission mechanism GT are often lubricated (including cooling) by oil, and the vehicle drive device 100 of the present embodiment is also lubricated by oil. For example, oil stored in an oil reservoir formed on the lower side Z2 of the case 9 is scooped up by an oil pump OP (see FIG. 4) or the gears of the power transmission mechanism GT and supplied to lubrication target portions such as bearings and cooling target portions such as the stator coils 11b of the rotary electric machine MG. FIG. 4 illustrates an oil channel 40 in a configuration in which the oil discharged from the oil pump OP is supplied to the rotary electric machine MG (such as the stator coils 11b and the bearings of the rotor shaft 13) and the power transmission mechanism GT (such as the bearings of the gears). Since the temperature of the oil used for cooling increases, an oil cooler OC for cooling the oil is connected to the oil channel 40. The oil cooler OC cools the oil by exchanging heat with a coolant.

As described above, the inverter module INV includes the cooling unit 38 that cools the switching elements constituting the inverter circuit PM. Therefore, the vehicle drive device 100 includes a coolant circuit module 3 that defines a coolant circuit 30 through which the coolant circulates along a path extending through the cooling unit 38 and a radiator 37 (onboard radiator). As shown in FIG. 4, the radiator 37, a first water pump 36, the cooling unit 38, and a three-way valve 35 are connected to the coolant circuit 30. The coolant circuit module 3 includes at least a channel formed in the case 9 and the cooling unit 38. The coolant circuit module 3 may further include the three-way valve 35 and the first water pump 36. The coolant that is cooled (whose heat is dissipated) by the radiator 37 is sent to the coolant circuit 30 by the first water pump 36, removes heat from the inverter module INV and the power supply module PWR in the cooling unit 38, returns to the radiator 37 via the three-way valve 35, and is exhausted of heat.

As shown in FIG. 4, the oil cooler OC described above is also connected to the coolant circuit 30. The oil cooler OC cools the oil flowing through the oil channel 40 by exchanging heat with the coolant flowing through the coolant circuit 30. A water-cooled condenser 31 (refrigerant heat exchanger) is also connected to the coolant circuit 30. The water-cooled condenser 31 exchanges heat between the refrigerant of the air conditioner and the coolant. For example, the water-cooled condenser 31 can remove heat from the refrigerant having a higher temperature than the coolant during cooling, and can provide heat to the refrigerant having a lower temperature than the coolant during heating.

The coolant whose temperature has increased after passing through the cooling unit 38, the oil cooler OC, and the water-cooled condenser 31 returns to the radiator 37 via the three-way valve 35, and is exhausted of heat. When there is no need to exhaust heat in cold weather etc., the temperature of the oil is to be increased using the coolant, or heating is performed using the air conditioner, the heat that would otherwise be discharged by the radiator 37 is utilized. In such a case, the three-way valve 35 switches the coolant channel so that the coolant circulates without passing through the radiator 37.

As described above, the water-cooled condenser 31 is connected to the refrigerant circuit 20 through which the refrigerant of the air conditioner flows. As shown in FIG. 4, an evaporator 44, an accumulator 41, a compressor 42, a cabin condenser 43, a first valve V1, a second valve V2, a third valve V3, and a fourth valve V4 are connected to the refrigerant circuit 20.

The evaporator 44 is a core functional component for cooling. The evaporator 44 removes heat from the surroundings by gasifying the refrigerant, and releases cool air into the vehicle cabin. During the cooling, the second valve V2 is closed and the refrigerant is supplied to the evaporator 44 through the first valve V1 that is an expansion valve. The refrigerant passing through the evaporator 44 is supplied to the accumulator 41. During heating, the first valve V1 is closed and the refrigerant is supplied to the accumulator 41 through the second valve V2 (non-expansion valve). The accumulator 41 separates liquid from the refrigerant that is a mixture of gas and liquid, and supplies only gas (refrigerant gas) to the compressor 42. The separated liquid passes through an unillustrated path and merges with a channel through which the liquid refrigerant flows, or is atomized and merges with an input pipe from the accumulator 41 to the compressor 42 in small amounts so as not to impose a load on the compressor 42. The compressor 42 compresses a refrigerant gas having relatively low temperature and pressure into a refrigerant having high temperature and pressure. The cabin condenser 43 is a heat source for heating using a heat pump system. The cabin condenser 43 releases heat of condensation generated by the compressor 42 into the vehicle cabin. During cooling, the flow of air through the cabin condenser 43 is blocked, and no heat exchange takes place in the cabin condenser 43. The refrigerant that exits the cabin condenser 43 flows into the water-cooled condenser 31 via the third valve V3 that is an expansion valve. During the cooling, it is preferable that the high-temperature refrigerant return to the water-cooled condenser 31 via an unillustrated path without passing through the third valve V3, or the third valve V3 function as a non-expansion valve to maintain the high temperature and allow the refrigerant to flow.

The refrigerant circuit 20 has at least part of a path (first channel 20a: path during cooling) that runs from the water-cooled condenser 31, passes through the first valve V1 (expansion valve) and the evaporator 44, and reaches the accumulator 41, and at least part of a path (second channel 20b) that runs from the water-cooled condenser 31, passes through a path to the accumulator 41 via the second valve V2 (non-expansion valve) (path during heating), further passes through the compressor 42, the cabin condenser 43, and the third valve V3 (expansion valve), and returns to the water-cooled condenser 31.

The compressor 42, the cabin condenser 43, and the evaporator 44 are core functional components of the air conditioner. The compressor 42, the cabin condenser 43, and the evaporator 44 are structured as, for example, a cabin unit that adjusts the temperature and the air volume during heating and cooling and selects the air outlet in the air conditioner. The cabin unit is mounted on the vehicle as a single onboard device called, for example, HVAC (Heating, Ventilation, and Air Conditioning).

In the present embodiment, a battery heat sink 34 also cools the onboard battery BT by exchanging heat with a coolant, and the coolant whose temperature has increased is cooled by exchanging heat with the refrigerant in a chiller 32. Therefore, a third channel 20c is formed as a path through which the refrigerant flows from the water-cooled condenser 31 to the accumulator 41 via the fourth valve V4 (expansion valve) and the chiller 32. For example, the battery heat sink 34 can also be used as a heat source during heating, and the coolant of the battery heat sink 34 can be cooled by the refrigerant during cooling.

A second coolant circuit 30B along which the coolant flows from the chiller 32, passes through the battery heat sink 34 and a second water pump 33, and returns to the chiller 32 is connected to the chiller 32. Similarly to the water-cooled condenser 31, the chiller 32 exchanges heat between the coolant and the refrigerant, and removes heat from the coolant to cool the coolant. The coolant whose temperature has increased by heat exchange with the battery heat sink 34 is cooled in the chiller 32. By providing the second coolant circuit 30B for cooling the onboard battery BT and the third channel 20c for cooling the coolant flowing through the second coolant circuit 30B, it is easier to relax restrictions on input-output currents for the onboard battery BT even in a case where the current flowing to the onboard battery BT increases and the temperature of the onboard battery BT increases as in the case of quick charging or high-speed traveling.

As described above, the refrigerant circuit 20 includes the first channel 20a including the refrigerant channel from the water-cooled condenser 31 (refrigerant heat exchanger) to the evaporator 44, the second channel 20b including the refrigerant channel from the compressor 42 to the water-cooled condenser 31, and the third channel 20c including the refrigerant channel including the chiller 32. The refrigerant flowing through the first channel 20a has a lower temperature than the refrigerant flowing through the second channel 20b and the third channel 20c. The refrigerant flowing through the third channel 20c has a lower temperature than the refrigerant flowing through the second channel 20b.

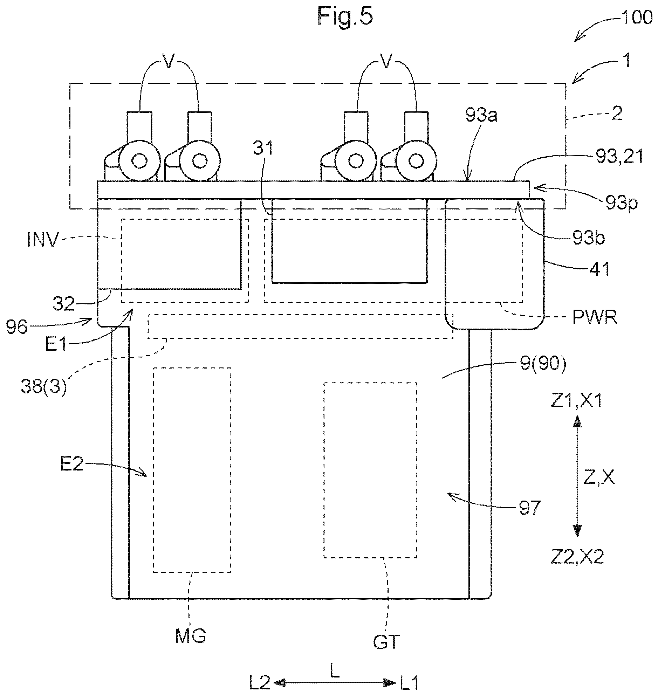

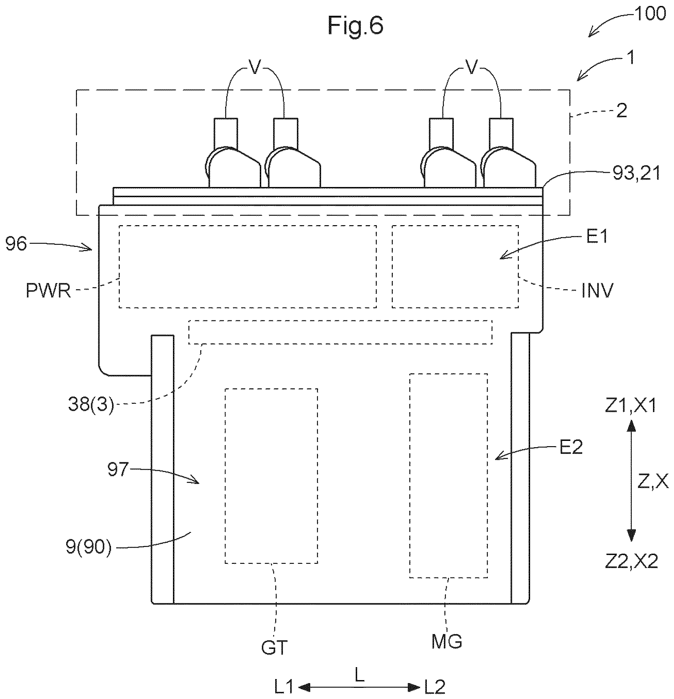

In the present embodiment, part of the channels constituting the refrigerant circuit 20 are formed using the first cover 93 of the case 9. As shown in FIGS. 1, 5, etc., control valves V (first valve V1, second valve V2, third valve V3, fourth valve V4) that control the flow rate or the channel of the refrigerant in the refrigerant circuit 20 are attached to a first-cover first surface 93a that is a surface of the first cover 93 oriented to an opposite side (opening-direction first side X1 (opening-direction opposite case side)) to the opening-direction second side X2 (opening-direction case side). As shown in FIGS. 1 and 5 to 7, the refrigerant circuit 20 and the control valves V formed in the first cover 93 constitute the refrigerant circuit module 2. The refrigerant circuit module 2 is attached to the case 9 by forming part of the refrigerant circuit 20 (refrigerant manifold 21 described later) using the first cover 93. Since the first cover 93 is fixed to the case body 90, the refrigerant circuit module 2 can be regarded as being fixed integrally to the case 9.

The first housing chamber E1 is formed in a space surrounded by the inner walls of the case 9 including a first-cover second surface 93b that is a surface of the first cover 93 oriented to the opening-direction second side X2 (opening-direction case side). Therefore, the inverter module INV is housed in the housing space inside the case 9. In the present embodiment, the power supply module PWR is also housed in the housing space inside the case 9. The refrigerant circuit 20 is formed inside the first cover 93, in other words, in an area sandwiched between the first-cover first surface 93a and the first-cover second surface 93b. The control valves V are attached to the first-cover first surface 93a. Therefore, the refrigerant circuit module 2 can be regarded as being disposed outside the case 9. As shown in FIG. 3, both the inverter module INV and the power supply module PWR are connected to the onboard battery BT. The inverter module INV and the power supply module PWR that are both power circuits may share components such as a connector that connects the onboard battery BT and the vehicle drive device 100, and the direct current link capacitor 16. When both the inverter module INV and the power supply module PWR are housed in the housing space inside the case 9, it is possible to reduce the number of components by sharing components and to facilitate wiring. The configuration of the air conditioner, that is, the configuration of the refrigerant circuit 20, may differ from vehicle to vehicle. When the refrigerant circuit module 2 is disposed outside the case 9, it is possible to increase the degree of freedom in designing the vehicle drive device 100 in consideration of thermal management.

As described above, the first housing chamber E1 is disposed on the upper side Z1 with respect to the rotary electric machine MG. Since the refrigerant circuit module 2 is structured by the refrigerant circuit 20 and the control valves V formed in the first cover 93, the refrigerant circuit module 2 is disposed on the upper side Z1 with respect to the first housing chamber E1. That is, the refrigerant circuit module 2, the first housing chamber E1, and the rotary electric machine MG are disposed in this order from the upper side Z1 to the lower side Z2 along the up-down direction Z. The refrigerant circuit module 2 is positioned to overlap the first housing chamber E1 when viewed in the up-down direction Z. In the present embodiment, the refrigerant circuit module 2, the first housing chamber E1, and the rotary electric machine MG are disposed to overlap each other when viewed in the up-down direction Z.

The water-cooled condenser 31, the chiller 32, and the accumulator 41 serving as functional components constituting the refrigerant channels in the refrigerant circuit 20 are attached to the refrigerant circuit module 2. The refrigerant circuit module 2 and these functional components constitute a refrigerant module 1. In a configuration in which the onboard battery BT is not cooled using the coolant, that is, in a case where the third channel 20c is not formed, the chiller 32 may be omitted. Therefore, the refrigerant circuit module 2, the water-cooled condenser 31, and the accumulator 41 may constitute the refrigerant module 1.

Refrigerant channel components include the control valves V and the functional components, and the functional components include the water-cooled condenser 31, the chiller 32, and the accumulator 41. The compressor 42, the cabin condenser 43, the evaporator 44, and the battery heat sink 34 are also the functional components though they are not included in the refrigerant module 1 in the present embodiment. The second water pump 33 is also the functional component. The second water pump 33 may be included in the refrigerant module 1, for example, when the second water pump 33 is provided integrally in the vehicle drive device 100 as shown in FIG. 4. As shown in FIGS. 1, 5 to 7, and 9, the accumulator 41 is included in the refrigerant module 1 when attached to the first cover 93. The accumulator 41 may be disposed separately from the vehicle drive device 100 and not be included in the refrigerant module 1.

Among the functional components exemplified above, at least the water-cooled condenser 31 corresponds to a specific functional component included in the refrigerant module 1. The chiller 32 and the accumulator 41 that may constitute the refrigerant module 1 together with the water-cooled condenser 31 may also correspond to the specific functional components depending on configurations.

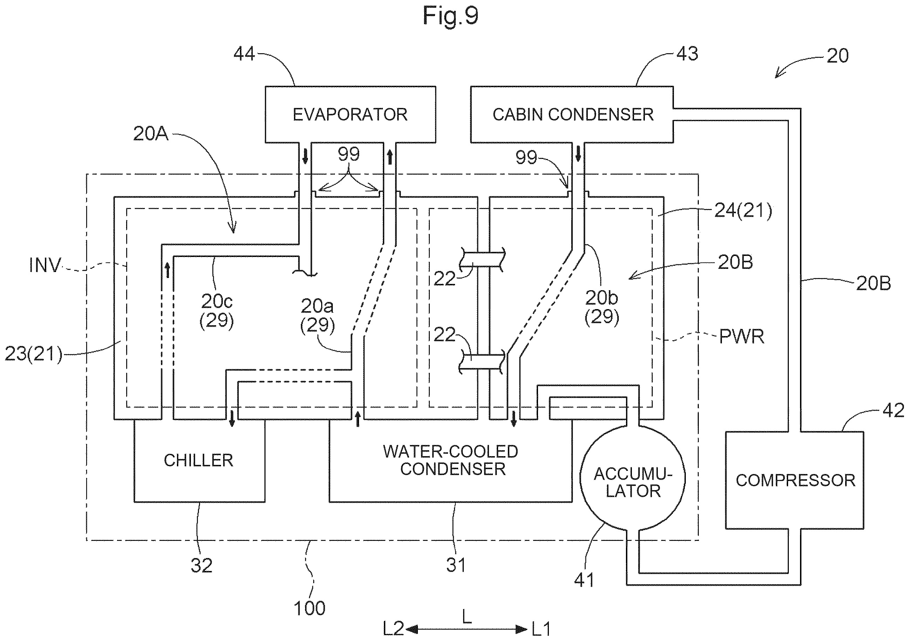

The portion of the first cover 93 in which the refrigerant circuit 20 is formed will be referred to as "refrigerant manifold 21." As shown in FIG. 9, the refrigerant manifold 21 is divided into a first manifold 23 and a second manifold 24. The first manifold 23 and the second manifold 24 are connectable via a communication channel 22. As described above, the refrigerant circuit 20 has the first channel 20a through which a relatively low-temperature refrigerant flows, and the second channel 20b through which a relatively high-temperature refrigerant flows. The first channel 20a that is the refrigerant channel from the water-cooled condenser 31 to the evaporator 44 is formed mainly in the first manifold 23. The second channel 20b that is the refrigerant channel from the compressor 42 to the water-cooled condenser 31 is formed mainly in the second manifold 24. The first manifold 23 corresponds to a first channel area 20A of the refrigerant circuit 20. The second manifold 24 corresponds to a second channel area 20B of the refrigerant circuit 20.

The refrigerant manifold 21 is provided with connection portions 99 for pipes that connect the refrigerant manifold 21 and the functional components such as the evaporator 44 and the cabin condenser 43 that are not integrated with the vehicle drive device 100. The connection portions 99 are preferably formed on the first-cover first surface 93a that is the surface of the first cover 93 oriented to the opening-direction first side X1 (opposite to the opening-direction case side) similarly to the control valves V.

FIG. 9 illustrates a configuration in which the third channel 20c is formed in the first manifold 23. When at least part of the third channel 20c is formed in the refrigerant manifold 21, the third channel 20c may be formed in either the first manifold 23 or the second manifold 24. The third channel 20c may be formed across both the first manifold 23 and the second manifold 24.

In the present embodiment, the refrigerant circuit module 2 is positioned closer to the cabin unit of the air conditioner than the first housing chamber E1 and the second housing chamber E2 in the onboard state. Therefore, it is easier to arrange, inside the vehicle, the piping between the refrigerant circuit module 2 and the evaporator 44, the piping between the refrigerant circuit module 2 and the compressor 42, and the piping between the refrigerant circuit module 2 and the cabin condenser 43, and to reduce the total piping length.

It is more preferable that the disposition height of the refrigerant circuit module 2 in the up-down direction Z be approximately the same as the disposition height of the cabin unit of the air conditioner in the up-down direction Z. In other words, it is preferable that the disposition position of the refrigerant circuit module 2 in the up-down direction Z be closer to the disposition position of the cabin unit in the up-down direction Z than the disposition position of the first housing chamber E1 in the up-down direction Z and the disposition position of the second housing chamber E2 in the up-down direction Z.

In the present embodiment, the first housing chamber E1 and the second housing chamber E2 are formed using the case body 90 that is a single member. For example, a first case body that defines the first housing chamber E1 and a second case body that defines the second housing chamber E2 may be formed from separate members, and the case 9 having the first housing chamber E1 and the second housing chamber E2 may be formed by connecting the first case body and the second case body. The first cover 93 is a cover that closes the first housing chamber E1 that houses the inverter module INV. The refrigerant circuit module 2 is structured by using the first cover 93 as the refrigerant manifold 21 and attaching the control valves V to the first cover 93. The refrigerant module 1 is structured by attaching the plurality of refrigerant channel components (control valves V, functional components) to the first cover 93. Therefore, it can be said that an onboard inverter unit 10 is structured by the inverter module INV, the case 9 (first case portion 91) that houses the inverter module INV, the cover (first cover 93) that closes the opening (first opening 9a) of the case 9, and the refrigerant module 1 that defines the refrigerant circuit 20 through which the refrigerant for the air conditioner circulates.

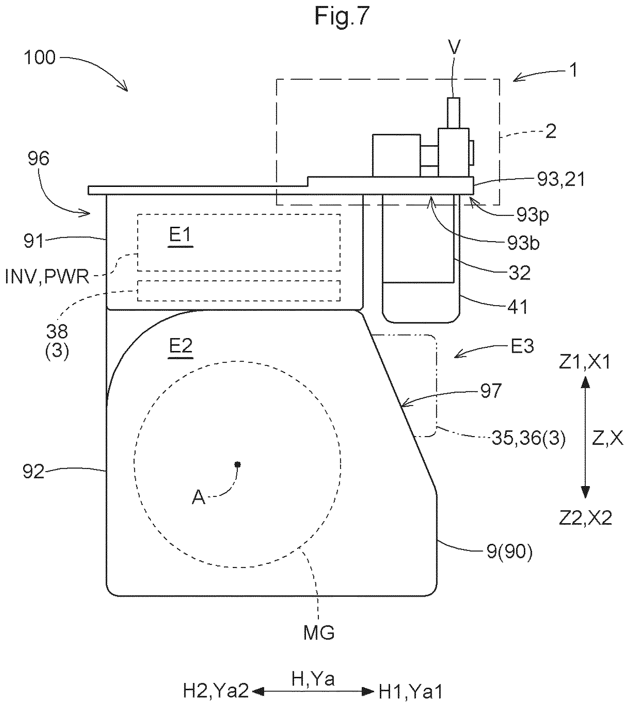

As described above, the refrigerant module 1 includes a refrigerant channel 29 (see FIG. 4) that is a channel of the refrigerant in the refrigerant circuit 20, and a plurality of functional components that is connected to each other by the refrigerant channel 29 and constitutes the refrigerant circuit 20. The refrigerant channel 29 is formed inside the first cover 93. As shown in FIGS. 1 and 7, the first cover 93 includes a protrusion 93p that protrudes to any side in directions along the opening plane of the first opening 9a (opening plane directions Y) relative to the case 9. As shown in FIGS. 1, 5, 7, etc., the specific functional component that is at least part of the plurality of functional components is attached to the first-cover second surface 93b (surface of the first cover 93 oriented to the opening-direction case side) of the protrusion 93p, and is connected to the refrigerant channel 29. The power supply module PWR may or may not be housed in the first housing chamber E1. That is, the power supply module PWR may be disposed inside the case 9 or outside the case 9 as long as the power supply module PWR is attached to the case 9.

According to the present embodiment, the refrigerant module 1 can be provided integrally to the inverter module INV and the case 9 and the first cover 93 for housing the inverter module INV. That is, the inverter module INV and the refrigerant module 1 can be integrated together. Therefore, it is easier to reduce the number of components and mount the onboard inverter unit 10 even on a relatively small-size vehicle than in a case where the inverter module INV and the refrigerant module 1 are separate. The specific functional component of the refrigerant module 1 is attached to the first-cover second surface 93b. Therefore, the specific functional component is disposed outside the first housing chamber E1 of the case 9 and side by side with the first housing chamber E1. Thus, the inverter module INV and the refrigerant module 1 can be integrated together and appropriately disposed separately on the inside and outside of the first housing chamber E1. Further, the specific functional component of the refrigerant module 1, the case 9, and the inverter module INV can be disposed on the same side (opening-direction second side X2 (opening-direction case side)) with respect to the first cover 93. Thus, the inverter module INV and the refrigerant module 1 can be integrated together and the increase in size of the onboard inverter unit 10 can be suppressed.

As described above, the first case portion 91 of the case 9 includes the peripheral wall portion 96 disposed so as to surround the first opening 9a (opening of the case) and extend along the opening direction X. In the present embodiment, as shown in FIGS. 1, 7, etc., a specific direction among the opening plane directions Y that are directions along the opening plane of the first opening 9a is defined as the specific opening plane direction Ya (first direction), and the protrusion 93p protrudes from the case 9 to the specific opening plane direction first side Ya1 (first-direction first side) that is one side in the specific opening plane direction Ya (first direction). The specific functional component is positioned to overlap the peripheral wall portion 96 in a specific opening plane direction view (first-direction view) along the specific opening plane direction Ya (first direction).

When there is a plurality of specific functional components, all the specific functional components are positioned to overlap the peripheral wall portion 96. For example, when the specific functional components include the water-cooled condenser 31, the accumulator 41, and the chiller 32 as shown in FIGS. 1, 5, etc., all the water-cooled condenser 31, the accumulator 41, and the chiller 32 are positioned to overlap the peripheral wall portion 96.

The peripheral wall portion 96 surrounding the first opening 9a (opening) overlaps the housing section in the case 9 that houses the inverter module INV in the specific opening plane direction view (first-direction view). Since the inverter module INV is housed in the housing space, the specific functional component of the refrigerant module 1, the case 9, and the inverter module INV can be disposed to overlap each other in the specific opening plane direction view (first-direction view). Therefore, it is easy to suppress the increase in size of the onboard inverter unit 10, for example, in the opening direction X or in a direction orthogonal to the opening direction X and the specific opening plane direction Ya (first direction). That is, with this configuration, the inverter module INV and the refrigerant module 1 can be integrated together and the increase in size of the onboard inverter unit 10 can be suppressed.

The vehicle drive device 100 of the present embodiment can be structured by the onboard inverter unit 10, the rotary electric machine MG, the output members drivingly connected to the wheels W, and the power transmission mechanism GT that transmits the driving force between the rotary electric machine MG and the output members. As described above, the case 9 includes the first housing chamber E1 that houses the inverter module INV, and the second housing chamber E2 that houses the rotary electric machine MG and the power transmission mechanism GT. As shown in FIGS. 1 and 5 to 7, the first housing chamber E1 and the second housing chamber E2 are arranged in the opening direction X. As shown in FIGS. 1 and 7, the specific functional component is positioned to overlap, in the opening-direction view along the opening direction X, the tubular peripheral wall portion 97 that is the portion surrounding the second housing chamber E2 of the case 9.

The specific functional component is attached to the surface (first-cover second surface 93b) of the protrusion 93p of the first cover 93 (cover) that is oriented to the opening-direction case side. If the specific functional component and the portion (tubular peripheral wall portion 97) surrounding the second housing chamber E2 of the case 9 do not overlap each other in the opening-direction view, the protrusion 93p and the specific functional component protrude in the protruding direction of the protrusion 93p relative to the portion (tubular peripheral wall portion 97) surrounding the second housing chamber E2 of the case 9. That is, the size of the vehicle drive device 100 to which the specific functional component is attached is likely to increase in the protruding direction of the protrusion 93p relative to the outer shape of the case 9. In this configuration, the specific functional component and the portion (tubular peripheral wall portion 97) surrounding the second housing chamber E2 of the case 9 overlap each other in the opening-direction view. Therefore, it is easier to downsize the vehicle drive device 100 in the opening-direction view than in the case where they do not overlap each other.

As shown in FIGS. 1 and 7, the tubular peripheral wall portion 97 that is the portion surrounding the second housing chamber E2 in the second case portion 92 bulges to the specific opening plane direction first side Ya1 (first-direction first side) relative to the first case portion 91 (peripheral wall portion 96 of the first case portion 91). Therefore, assuming a virtual cuboid that outwardly touches the vehicle drive device 100, an extra-case disposition area E3 surrounded by the surface of the cuboid, the specific functional component, and the tubular peripheral wall portion 97 is formed between the protrusion 93p and the tubular peripheral wall portion 97, that is, at least between the specific functional component and the tubular peripheral wall portion 97. For example, when the three-way valve 35 and the first water pump 36 are included in the extra-case disposition area E3, many of the components of the above coolant circuit module 3 can be integrated with the vehicle drive device 100.

The oil pump OP and the oil cooler OC may be disposed in the extra-case disposition area E3 instead of the three-way valve 35 and the first water pump 36 or in addition to the three-way valve 35 and the first water pump 36. If the oil pump OP is disposed inside the case 9, only the oil cooler OC may be disposed in the extra-case disposition area E3.

The vehicle drive device 100 of the present embodiment further includes the oil cooler OC that cools the oil stored in the second housing chamber E2, and the coolant circuit module 3 that defines the coolant circuit 30 through which the coolant circulates along the path extending through the oil cooler OC and the radiator 37. The present embodiment illustrates the configuration in which the coolant circuit module 3 is structured by the three-way valve 35, the first water pump 36, and the cooling unit 38. The coolant circuit module 3 may be structured without passing through the cooling unit 38. The specific functional components include the water-cooled condenser 31 that is the refrigerant heat exchanger that exchanges heat between the refrigerant for the air conditioner and the coolant.

When the water-cooled condenser 31 (refrigerant heat exchanger) is fixed integrally to the case 9 via the refrigerant channel components, it is possible to reduce the number of pipes etc. connecting the functional components constituting the refrigerant circuit 20.

As described above, the functional components include the control valves V that control the flow rate or the channel of the refrigerant in the refrigerant circuit 20. The specific functional components may include the accumulator 41 that separates the refrigerant into liquid and gas. The control valves V are attached to the surface (first-cover first surface 93a) of the first cover 93 (cover) that is oriented to the opposite side to the opening-direction second side X2 (opening-direction case side). The water-cooled condenser 31 (refrigerant heat exchanger) and the accumulator 41 are arranged along the wall portion (peripheral wall portion 96) surrounding the first housing chamber E1 of the case 9.

When the control valves V are attached to the surface (first-cover first surface 93a) of the first cover 93 (cover) that is oriented to the opposite side to the opening-direction second side X2 (opening-direction case side), it is possible to dispose the control valves V and the specific functional components relatively close to each other, for example, across the first cover 93 (cover). When the plurality of specific functional components is arranged along the wall portion (peripheral wall portion 96), the plurality of specific functional components can be disposed efficiently. With this configuration, the increase in size of the vehicle drive device 100 can be suppressed and the plurality of functional components of the refrigerant module 1 can be disposed appropriately.

As described above, in the present embodiment, the first housing chamber E1 houses, together with the inverter module INV, the power supply module PWR that is electrically connected to the onboard battery BT and includes the converter 61 (voltage conversion circuit) that converts the voltage of the onboard battery BT and the charging circuit 62 that charges the onboard battery BT from the external power supply 60. In this case, the above onboard inverter unit 10 may include the power supply module PWR.

That is, the vehicle drive device 100 of the present embodiment includes the rotary electric machine MG including the rotor 12, the output members drivingly connected to the wheels W, the power transmission mechanism GT that transmits the driving force between the rotary electric machine MG and the output members, the inverter module INV that controls the drive of the rotary electric machine MG, the power supply module PWR that is electrically connected to the onboard battery BT and includes the converter 61 (voltage conversion circuit) that converts the voltage of the onboard battery BT and the charging circuit 62 that charges the onboard battery BT from the external power supply 60, the refrigerant circuit module 2 that defines the refrigerant circuit 20 through which the refrigerant for the air conditioner circulates, and the case 9 including the first housing chamber E1 that houses the inverter module INV and the power supply module PWR and the second housing chamber E2 that houses the rotary electric machine MG and the power transmission mechanism GT. As shown in FIGS. 1 and 2, the power transmission mechanism GT is disposed on the first axial side L1 with respect to the rotor 12. The inverter module INV includes the switching elements constituting the inverter circuit PM, and the cooling unit 38 that cools the switching elements.

As shown in FIGS. 1, 5, 6, etc., the inverter module INV is disposed on the upper side Z1 with respect to the rotary electric machine MG and positioned to overlap the rotary electric machine MG in the up-down direction view along the up-down direction Z. As shown in FIGS. 1, 5, 6, 8, 9, etc., the power supply module PWR is disposed to adjoin the inverter module INV on the first axial side L1. As shown in FIGS. 1, 5, 6, and 7, the refrigerant circuit module 2 is disposed on the upper side Z1 in the up-down direction Z with respect to the inverter module INV and the power supply module PWR and positioned to overlap the inverter module INV and the power supply module PWR in the up-down direction view. As shown in FIGS. 5 to 7 etc., the refrigerant circuit module 2 is fixed integrally to the case 9.

As shown in FIGS. 1, 5, 6, etc., the power supply module PWR is disposed on the upper side Z1 with respect to the power transmission mechanism GT and positioned to overlap the power transmission mechanism GT in the up-down direction view along the up-down direction Z.

In the present embodiment, in the vehicle drive device 100, the inverter module INV that controls the drive of the rotary electric machine MG is provided integrally to the drive unit including the rotary electric machine MG and the power transmission mechanism GT, and the power supply module PWR and the refrigerant circuit module 2 for the air conditioner are provided integrally to the drive unit. Therefore, it is possible to reduce the number of wires, pipes, etc. connecting the drive unit and the inverter module INV to the power supply module PWR and the refrigerant circuit module 2. Further, it is easy to downsize the entire vehicle drive device 100 with many functions by integrating the case 9 that houses these components. In this configuration, the inverter module INV provided with the cooling unit 38 is disposed on the upper side Z1 of the rotary electric machine MG that generates a large amount of heat due to the large current flowing through the stator coil, and the power supply module PWR is disposed to adjoin the inverter module INV on the first axial side L1, that is, on the side where the power transmission mechanism GT is disposed with respect to the rotary electric machine MG. The refrigerant circuit module 2 is disposed on the upper side Z1 with respect to the inverter module INV and the power supply module PWR, and the transfer of the heat generated by the rotary electric machine MG to the refrigerant circuit module 2 is prevented by the inverter module INV provided with the cooling unit 38 and the power supply module PWR. Therefore, it is easy to reduce the effect of the heat generated by the rotary electric machine MG on the refrigerant circuit module 2.

As shown in FIG. 4, the vehicle drive device 100 further includes the oil cooler OC that cools the oil stored in the second housing chamber E2, and the coolant circuit module 3 that defines the coolant circuit 30 through which the coolant circulates along the path extending through the oil cooler OC and the radiator 37 (onboard radiator). The refrigerant circuit module 2 includes the refrigerant manifold 21 (refrigerant channel component) that defines the channel of the refrigerant in the refrigerant circuit 20, and the control valves V attached to the refrigerant manifold 21. The water-cooled condenser 31 (refrigerant heat exchanger) that exchanges heat between the refrigerant and the coolant is further attached to the refrigerant manifold 21 as the functional component constituting the refrigerant circuit 20.

When the water-cooled condenser 31 (refrigerant heat exchanger) is fixed integrally to the case 9 via the refrigerant manifold 21 (refrigerant channel component), it is possible to reduce the number of pipes etc. connecting the functional components constituting the refrigerant circuit 20.

As described above with reference to FIGS. 4 and 9, in the present embodiment, the refrigerant circuit 20 includes the first channel area 20A that is the refrigerant channel from the water-cooled condenser 31 (refrigerant heat exchanger) to the evaporator 44, and the second channel area 20B that is the refrigerant channel from the compressor 42 to the water-cooled condenser 31 (refrigerant heat exchanger). The first channel area 20A is disposed so as to overlap the inverter module INV in the up-down direction view, and the second channel area 20B is disposed so as to overlap the power supply module PWR in the up-down direction view.

A large current flows through the switching elements constituting the inverter circuit PM. Therefore, the switching elements are likely to generate heat. In consideration of heat dissipation, it is preferable that the temperature in the vicinity of the switching elements do not increase. If the inverter module INV includes the control circuit that controls the inverter circuit PM (rotary electric machine control unit 17, driver 18: see FIG. 3), the electronic components constituting the control circuit are often relatively susceptible to heat. Therefore, it is preferable that the temperature in the vicinity of the control circuit do not increase. In this configuration, the first channel area 20A having a relatively low temperature in the refrigerant circuit 20 is positioned close to the inverter module INV, and the second channel area 20B having a relatively high temperature in the refrigerant circuit 20 is positioned close to the power supply module PWR. Thus, it is possible to suppress the transfer of the heat from the refrigerant circuit module 2 to the switching elements constituting the inverter circuit PM and the control circuit of the inverter circuit PM in the inverter module INV.

As described above with reference to FIG. 4, the refrigerant circuit 20 includes the accumulator 41 that separates the refrigerant into liquid and gas. As shown in FIGS. 1, 7, 9, etc., the water-cooled condenser 31 (refrigerant heat exchanger) and the accumulator 41 do not overlap the inverter module INV and the power supply module PWR in the up-down direction view. As shown in FIG. 7, the disposition area in the up-down direction Z is positioned to overlap the inverter module INV and the power supply module PWR.

Among the components constituting the refrigerant circuit 20, the water-cooled condenser 31 (refrigerant heat exchanger) and the accumulator 41 are likely to have relatively large sizes. With this configuration, the water-cooled condenser 31 (refrigerant heat exchanger) and the accumulator 41 can be disposed side by side with the inverter module INV and the power supply module PWR. Thus, the dimension of the vehicle drive device 100 in the up-down direction Z can be reduced easily.

As described above with reference to FIG. 4, in the present embodiment, the refrigerant circuit 20 includes the chiller 32 that is a coolant heat exchanger that cools the coolant flowing through the second coolant circuit 30B by exchanging heat between the coolant and the refrigerant. As shown in FIGS. 1, 7, 9, etc., the chiller 32 does not overlap the inverter module INV and the power supply module PWR in the up-down direction view. As shown in FIG. 7, the disposition area in the up-down direction Z is positioned to overlap the inverter module INV and the power supply module PWR. Among the components constituting the refrigerant circuit 20, the chiller 32 is also likely to have a relatively large size. With this configuration, the chiller 32 can also be disposed side by side with the inverter module INV and the power supply module PWR. Thus, the dimension of the vehicle drive device 100 in the up-down direction Z can be reduced easily.

Although detailed paths are omitted, as shown in FIGS. 1 and 8, the cooling unit 38 has the coolant channel 39 through which the coolant flows. The switching elements constituting the inverter circuit PM are attached to the first cooling unit surface 38a that is the upper surface of the cooling unit 38. The control board ECU that controls the inverter circuit PM is disposed between the switching elements and the refrigerant circuit module 2 in the up-down direction Z.

A large current flows through the switching elements constituting the inverter circuit PM. Therefore, the switching elements are likely to generate heat. The electronic components mounted on the control board ECU that controls the inverter circuit PM to constitute the control circuit that controls the inverter circuit PM are often relatively susceptible to heat. With this configuration, the cooling unit 38 enables the switching elements and the control board ECU to be disposed in the location where the heat from the rotary electric machine MG is less likely to be transferred. The switching elements attached to the upper surface (first cooling unit surface 38a) of the cooling unit 38 can appropriately be cooled by the cooling unit 38, and the transfer of the heat from the rotary electric machine MG to the control board ECU can be suppressed.

Hereinafter, other embodiments will be described. The configuration of each embodiment described below is not limited to being applied alone, and can be applied in combination with the configurations of other embodiments as long as there is no contradiction.
(1) The above description illustrates the configuration in which the first housing chamber E1 is disposed on the upper side Z1 in the up-down direction Z with respect to the rotary electric machine MG and positioned to overlap the rotary electric machine MG when viewed in the up-down direction Z, and the refrigerant circuit module 2 is disposed on the upper side Z1 in the up-down direction Z with respect to the first housing chamber E1 and positioned to overlap the first housing chamber E1 when viewed in the up-down direction Z. That is, the above description illustrates the configuration in which the refrigerant circuit module 2 is disposed on the upper surface side of the outer wall of the case 9. The refrigerant circuit module 2 may be disposed on the side surface of the case 9. For example, the refrigerant circuit module 2 may be attached to the outer wall of the case 9 at a position where it overlaps the outer edge of the rotary electric machine MG on the upper side Z1 in the up-down direction Z in the front-rear direction H view along the front-rear direction H. For example, it is preferable that the refrigerant circuit module 2 be positioned to overlap the peripheral wall portion 96 of the first case portion 91 at least in part when viewed in the front-rear direction H.

As in the above embodiment, it is preferable that the refrigerant circuit module 2 be positioned closer to the cabin unit of the air conditioner than the first housing chamber E1 and the second housing chamber E2 in the onboard state. For example, when the refrigerant circuit module 2 is disposed on a side surface where the vehicle drive device 100 (case 9) faces the cabin unit in the front-rear direction H, it is easier to arrange the piping between the refrigerant circuit module 2 and the cabin unit inside the vehicle, and to reduce the total piping length.

It is more preferable that the disposition height of the refrigerant circuit module 2 in the up-down direction Z be approximately the same as the disposition height of the cabin unit of the air conditioner in the up-down direction Z. In other words, it is preferable that the disposition position of the refrigerant circuit module 2 in the up-down direction Z be closer to the disposition position of the cabin unit in the up-down direction Z than the disposition position of the first housing chamber E1 in the up-down direction Z and the disposition position of the second housing chamber E2 in the up-down direction Z.

(2) The above description illustrates the configuration in which the power transmission mechanism GT includes the speed reducer 6 and the differential gear mechanism 5. The power transmission mechanism GT is not limited to this configuration. For example, the power transmission mechanism GT may include only the differential gear mechanism 5 without including the speed reducer 6. The power transmission mechanism GT may include only the speed reducer 6 without including the differential gear mechanism 5, and transmit driving power from one rotary electric machine MG to one wheel W. The present embodiment illustrates the planetary gear mechanism with a fixed speed ratio as the speed reducer 6, but the speed reducer 6 may have a multi-stage speed ratio.

(3) In the configuration in which the direct current link capacitor 16 is disposed side by side with the inverter circuit PM on the first cooling unit surface 38a as shown in FIG. 8, the direct current link capacitor 16 may be included in the inverter module INV. For example, if the direct current link capacitor 16 is disposed on the back side of the first cooling unit surface 38a, the direct current link capacitor 16 need not be included in the inverter module INV. For example, the direct current link capacitor 16 may be disposed on the lower side Z2 with respect to the cooling unit 38 and positioned to overlap the power transmission mechanism GT in the up-down direction view. The direct current link capacitor 16 is a component that is relatively resistant to heat. When such a component is disposed near the power transmission mechanism GT that is closer to the rotary electric machine MG than the cooling unit 38 in terms of the disposition position in the up-down direction Z and away from the rotary electric machine MG in terms of the disposition position in the axial direction L, the space on the lower side Z2 with respect to the cooling unit 38 can be utilized effectively and the entire vehicle drive device 100 is downsized easily.

It is preferable that the onboard inverter unit 10 include the direct current link capacitor 16 regardless of the disposition position of the direct current link capacitor 16.

(4) If both the converter 61 and the charging circuit 62 provided in the power supply module PWR are of transformer types, it is preferable to share transformer components that are likely to have large sizes. Similarly to the direct current link capacitor 16, the transformer is also a component that is relatively resistant to heat. Therefore, it is preferable that the transformer be disposed on the lower side Z2 with respect to the cooling unit 38 and positioned to overlap the power transmission mechanism GT in the up-down direction view. The space on the lower side Z2 with respect to the cooling unit 38 can be utilized effectively and the entire vehicle drive device 100 is downsized easily.

(5) As shown in FIG. 5 etc., the above description illustrates the configuration in which the refrigerant circuit module 2 disposed on the upper side Z1 in the up-down direction Z with respect to the inverter module INV and the power supply module PWR includes the refrigerant manifold 21 (refrigerant channel component) that defines the channel of the refrigerant in the refrigerant circuit 20 and the control valves V attached to the refrigerant manifold 21, and the water-cooled condenser 31 (refrigerant heat exchanger) is attached to the first-cover second surface 93b on the lower side Z2 of the refrigerant manifold 21 without being included in the refrigerant circuit module 2. If the water-cooled condenser 31 is attached to the first-cover first surface 93a on the upper side Z1 of the refrigerant manifold 21 similarly to the control valves V, the refrigerant circuit module 2 may include the water-cooled condenser 31.

(6) The above description illustrates the configuration in which the refrigerant channel 29 is formed inside the first cover 93 as the refrigerant manifold 21. There is no need to form almost all of the refrigerant channel 29 inside the first cover 93. Part of the refrigerant channel 29 may be formed using other members of the case 9 or pipes etc. formed from a member other than the case 9.

(7) The above description illustrates the configuration in which the protrusion 93p of the first cover 93 protrudes from the case 9 to the specific opening plane direction first side Ya1 (first-direction first side) that is one side in the specific opening plane direction Ya (first direction). The protrusion 93p may be formed so as to protrude in a plurality of directions among the opening plane directions Y. The above description illustrates the protrusion 93p that protrudes from one side (surface) of the first case portion 91 having the rectangular box shape to the outside of the first opening 9a. The protrusion 93p may be formed so as to protrude from a plurality of sides of the first case portion 91 to the outside of the first opening 9a.

(8) The above description illustrates the configuration in which the specific functional components that are attached to the surface (first-cover second surface 93b) of the protrusion 93p that is oriented to the opening-direction second side X2 (opening-direction case side) and are at least part of the plurality of functional components connected to the refrigerant channel 29 are the water-cooled condenser 31, the accumulator 41, and the chiller 32. The above description also illustrates the configuration in which all the control valves V are disposed on the surface (first-cover first surface 93a) of the protrusion 93p on the opening-direction first side X1. At least part of the control valves V may be included in the specific functional components and the control valves V may be attached to the first-cover second surface 93b.

### [Summary of Embodiment]

The embodiment of the above vehicle drive device (100) will be briefly summarized below.

In one aspect, the vehicle drive device (100) includes: a rotary electric machine (MG) including a rotor (12); an output member (52, 53, 54, 59, DS1, DS2, J) drivingly connected to a wheel (W); a power transmission mechanism (GT) configured to transmit a driving force between the rotary electric machine (MG) and the output member (52, 53, 54, 59, DS1, DS2, J); an inverter module (INV) configured to control drive of the rotary electric machine (MG); a power supply module (PWR) electrically connected to an onboard battery (BT); a refrigerant circuit module (2) that defines at least part of a refrigerant circuit (20) through which a refrigerant for an onboard air conditioner circulates; and a case (9) including a first housing chamber (E1) that houses the inverter module (INV) and a second housing chamber (E2) that houses the rotary electric machine (MG) and the power transmission mechanism (GT). The power supply module (PWR) and the refrigerant circuit module (2) are attached to the case (9).

In this configuration, in the vehicle drive device (100), the inverter module (INV) that controls the drive of the rotary electric machine (MG) is provided integrally to the drive unit including the rotary electric machine (MG) and the power transmission mechanism (GT), and the power supply module (PWR) and the refrigerant circuit module (2) for the onboard air conditioner are provided integrally to the drive unit. Therefore, it is possible to reduce the number of wires, pipes, etc. connecting the drive unit and the inverter module (INV) to the power supply module (PWR) and the refrigerant circuit module (2). Further, it is easy to downsize the entire vehicle drive device (100) with many functions by integrating the case (9) that houses these components.

It is preferable that the power supply module (PWR) be disposed in a housing space inside the case (9), and the refrigerant circuit module (2) be disposed outside the case (9).

The inverter module (INV) and the power supply module (PWR) that are both power circuits may have sharable components. When both the inverter module (INV) and the power supply module (PWR) are housed in the housing space inside the case (9), it is possible to facilitate wiring and reduce the number of components. The refrigerant circuit module (2) may have different configurations depending on vehicles. When the refrigerant circuit module (2) is disposed outside the case (9), it is possible to increase the degree of freedom in designing the vehicle drive device (100).

Assuming that an up-down direction (Z) is a direction along a vertical direction in an onboard state in which the vehicle drive device (100) is mounted on a vehicle, and the up-down direction (Z) is used as a reference, it is preferable that the first housing chamber (E1) be disposed on an upper side (Z1) in the up-down direction (Z) with respect to the rotary electric machine (MG), and the refrigerant circuit module (2) be disposed on the upper side (Z1) in the up-down direction (Z) with respect to the first housing chamber (E1).

**In** this configuration, the refrigerant circuit module (2) is disposed on the upper side (Z1) with respect to the first housing chamber (E1) that houses the inverter module (INV). Therefore, the distance from the rotary electric machine (MG) to the refrigerant circuit module (2) increases and the heat generated by the rotary electric machine (MG) is less likely to be transferred to the refrigerant circuit module (2). Thus, it is easy to reduce the effect of the heat generated by the rotary electric machine (MG) on the refrigerant circuit module (2).

In the vehicle drive device (100), it is preferable that the first housing chamber (E1) be disposed on the upper side (Z1) in the up-down direction (Z) with respect to the rotary electric machine (MG) and positioned to overlap the rotary electric machine (MG) in an up-down direction (Z) view along the up-down direction (Z), and the refrigerant circuit module (2) be disposed on the upper side (Z1) in the up-down direction (Z) with respect to the first housing chamber (E1) and positioned to overlap the first housing chamber (E1) in the up-down direction (Z) view.

In this configuration, the refrigerant circuit module (2), the first housing chamber (E1) that houses the inverter module (INV), and the rotary electric machine (MG) are disposed to overlap each other in the up-down direction (Z) view. That is, the first housing chamber (E1) is interposed between the refrigerant circuit module (2) and the rotary electric machine (MG). Therefore, it is easy to prevent the transfer of the heat generated by the rotary electric machine (MG) to the refrigerant circuit module (2). Thus, it is easy to reduce the effect of the heat generated by the rotary electric machine (MG) on the refrigerant circuit module (2).

Assuming that an up-down direction (Z) is a direction along a vertical direction in an onboard state in which the vehicle drive device (100) is mounted on a vehicle, and an axial direction (L) is a direction along a rotation axis (A) of the rotor (12), it is preferable that the power transmission mechanism (GT) be disposed on a first axial side (L1) that is one side in the axial direction (L) with respect to the rotor (12), the inverter module (INV) be positioned to overlap the rotary electric machine (MG) in an up-down direction (Z) view along the up-down direction (Z), the power supply module (PWR) be disposed to adjoin the inverter module (INV) on the first axial side (L1), and the refrigerant circuit module (2) be disposed on an upper side (Z1) in the up-down direction (Z) with respect to the inverter module (INV) and the power supply module (PWR), positioned to overlap the inverter module (INV) and the power supply module (PWR) in the up-down direction (Z) view, and fixed integrally to the case (9).

Since the power supply module (PWR) and the inverter module (INV) are disposed to adjoin each other in the axial direction (L) and the refrigerant circuit module (2) is disposed on the upper side (Z1) with respect to the inverter module (INV) and the power supply module (PWR), the distance between the refrigerant circuit module (2) and the rotary electric machine (MG) increases. Therefore, the heat generated by the rotary electric machine (MG) is less likely to be transferred to the refrigerant circuit module (2). Thus, it is easy to reduce the effect of the heat generated by the rotary electric machine (MG) on the refrigerant circuit module (2).

Assuming that an up-down direction (Z) is a direction along a vertical direction in an onboard state in which the vehicle drive device (100) is mounted on a vehicle, an axial direction (L) is a direction along a rotation axis (A) of the rotor (12), and a front-rear direction (H) is a direction orthogonal to the axial direction (L) in the up-down direction (Z) view, it is preferable that the refrigerant circuit module (2) be attached to an outer wall of the case (9) at a position where the refrigerant circuit module (2) overlaps an outer edge of the rotary electric machine (MG) on an upper side (Z1) in the up-down direction (Z) in a front-rear direction (H) view along the front-rear direction (H).

The rotary electric machine (MG) often has a substantially cylindrical shape about a rotor shaft (13). Therefore, the outer edge of the rotary electric machine (MG) in the up-down direction (Z) often has a smaller dimension in the front-rear direction (H). Thus, the disposition space of the vehicle drive device (100) in the vehicle is likely to have a dead space in an area where the outer edge is located. With this configuration, the refrigerant circuit module (2) can be disposed using such a dead space.

In the vehicle drive device (100), it is preferable that the refrigerant circuit module (2) be positioned closer to a cabin unit of the onboard air conditioner than the first housing chamber (E1) and the second housing chamber (E2) in an onboard state.

With this configuration, it is possible to reduce the length of the refrigerant channel through which the refrigerant flows between the refrigerant circuit module (2) and the cabin unit of the onboard air conditioner. For example, the total piping length is reduced, thereby reducing the disposition space and the total piping weight. Since the piping is shortened, the pressure loss during the flow of the refrigerant can be reduced.

Assuming that an up-down direction (Z) is a direction along a vertical direction in an onboard state in which the vehicle drive device (100) is mounted on a vehicle, it is preferable that a disposition position of the refrigerant circuit module (2) in the up-down direction (Z) be closer to a disposition position of a cabin unit of the onboard air conditioner in the up-down direction (Z) than a disposition position of the first housing chamber (E1) in the up-down direction (Z) and a disposition position of the second housing chamber (E2) in the up-down direction (Z).

When the refrigerant circuit module (2) and the cabin unit are disposed at approximately the same height, the piping of the refrigerant channel through which the refrigerant flows is easier, and the disposition space of the piping can be reduced. Further, the refrigerant flows more easily, and the pressure loss during the flow of the refrigerant can be reduced.

It is preferable that the vehicle drive device (100) further include an oil cooler (OC) configured to cool oil stored in the second housing chamber (E2), and a coolant circuit module (3) that defines a coolant circuit (30) through which a coolant circulates along a path extending through the oil cooler (OC) and an onboard radiator (37), the refrigerant circuit module (2) include a refrigerant channel component (21) that defines a channel of the refrigerant in the refrigerant circuit (20), and a control valve (V) attached to the refrigerant channel component (21), and a refrigerant heat exchanger (31) configured to exchange heat between the refrigerant and the coolant be further attached to the refrigerant channel component (21) as a functional component constituting the refrigerant circuit (20).

In this configuration, when the refrigerant heat exchanger (31) is fixed integrally to the case (9) via the refrigerant channel component (21), it is possible to reduce the number of pipes etc. connecting the functional component constituting the refrigerant circuit (20).

In the configuration of the vehicle drive device (100) in which the first housing chamber (E1) is disposed on the upper side (Z1) in the up-down direction (Z) with respect to the rotary electric machine (MG) and positioned to overlap the rotary electric machine (MG) in the up-down direction (Z) view along the up-down direction (Z), the refrigerant circuit module (2) is disposed on the upper side (Z1) in the up-down direction (Z) with respect to the first housing chamber (E1) and positioned to overlap the first housing chamber (E1) in the up-down direction (Z) view, the vehicle drive device (100) further includes the oil cooler (OC) configured to cool the oil stored in the second housing chamber (E2), and the coolant circuit module (3) that defines the coolant circuit (30) through which the coolant circulates along the path extending through the oil cooler (OC) and the onboard radiator (37), the refrigerant circuit module (2) includes the refrigerant channel component (21) that defines the channel of the refrigerant in the refrigerant circuit (20), and the control valve (V) attached to the refrigerant channel component (21), and the refrigerant heat exchanger (31) configured to cool the refrigerant by exchanging heat between the refrigerant and the coolant is further attached to the refrigerant channel component (21) as the functional component constituting the refrigerant circuit (20), it is preferable that the refrigerant circuit (20) include a first channel area (20A) that is a channel of the refrigerant from the refrigerant heat exchanger (31) to an onboard evaporator (44), and a second channel area (20B) that is a channel of the refrigerant from an onboard compressor (42) to the refrigerant heat exchanger (31), the first channel area (20A) be disposed so as to overlap the inverter module (INV) in the up-down direction (Z) view, and the second channel area (20B) be disposed so as to overlap the power supply module (PWR) in the up-down direction (Z) view.

A large current flows through switching elements constituting an inverter circuit (PM). Therefore, the switching elements are likely to generate heat. In consideration of heat dissipation, it is preferable that the temperature in the vicinity of the switching elements do not increase. If the inverter module (INV) includes a control circuit that controls the inverter circuit (PM), electronic components constituting the control circuit are often relatively susceptible to heat. Therefore, it is preferable that the temperature in the vicinity of the control circuit do not increase. In this configuration, the first channel area (20A) having a relatively low temperature in the refrigerant circuit (20) is positioned close to the inverter module (INV), and the second channel area (20B) having a relatively high temperature in the refrigerant circuit (20) is positioned close to the power supply module (PWR). Thus, it is possible to suppress the transfer of the heat from the refrigerant circuit module (2) to the switching elements constituting the inverter circuit (PM) and the control circuit of the inverter circuit (PM) in the inverter module (INV).

In the vehicle drive device (100), it is preferable that the refrigerant circuit (20) further include an accumulator (41) configured to separate the refrigerant into liquid and gas, and the refrigerant heat exchanger (31) and the accumulator (41) do not overlap the inverter module (INV) and the power supply module (PWR) in the up-down direction (Z) view and a disposition area in the up-down direction (Z) be positioned to overlap the inverter module (INV) and the power supply module (PWR).

Among the components constituting the refrigerant circuit (20), the refrigerant heat exchanger (31) and the accumulator (41) are likely to have relatively large sizes. With this configuration, the refrigerant heat exchanger (31) and the accumulator (41) can be disposed side by side with the inverter module (INV) and the power supply module (PWR). Thus, the dimension of the vehicle drive device (100) in the up-down direction (Z) can be reduced easily.

In the configuration of the vehicle drive device (100) in which the first housing chamber (E1) is disposed on the upper side (Z1) in the up-down direction (Z) with respect to the rotary electric machine (MG) and positioned to overlap the rotary electric machine (MG) in the up-down direction (Z) view along the up-down direction (Z), and the refrigerant circuit module (2) is disposed on the upper side (Z1) in the up-down direction (Z) with respect to the first housing chamber (E1) and positioned to overlap the first housing chamber (E1) in the up-down direction (Z) view, it is preferable that the inverter module (INV) include a switching element constituting an inverter circuit (PM), and a cooling unit (38) configured to cool the switching element, the cooling unit (38) include a coolant channel (39) through which a coolant flows, the switching element be attached to an upper surface (38a) of the cooling unit (38), and a control board (ECU) configured to control the inverter circuit (PM) be disposed between the switching element and the refrigerant circuit module (2) in the up-down direction (Z).

A large current flows through the switching element constituting the inverter circuit (PM). Therefore, the switching element is likely to generate heat. The electronic components mounted on the control board (ECU) that controls the inverter circuit (PM) to constitute the control circuit that controls the inverter circuit (PM) are often relatively susceptible to heat. With this configuration, the cooling unit (38) enables the switching element and the control board (ECU) to be disposed in the location where the heat from the rotary electric machine (MG) is less likely to be transferred. The switching element attached to the upper surface (38a) of the cooling unit (38) can appropriately be cooled by the cooling unit (38), and the transfer of the heat from the rotary electric machine (MG) to the control board (ECU) can be suppressed.

### Description of the Reference Numerals

2: refrigerant circuit module, 3: coolant circuit module, 9: case, 12: rotor, 20: refrigerant circuit, 20A: first channel area, 20B: second channel area, 21: refrigerant manifold (refrigerant channel component), 30: coolant circuit, 31: water-cooled condenser (refrigerant heat exchanger, functional component), 37: radiator (onboard radiator), 38: cooling unit, 38a: first cooling unit surface (upper surface of cooling unit), 39: coolant channel, 41: accumulator, 42: compressor (onboard compressor), 44: evaporator, 52: side gear (output member), 53: first side gear (output member), 54: second side gear (output member), 59: spline engagement portion (output member), 60: external power supply, 93: first cover (cover), 100: vehicle drive device, A: rotation axis, BT: onboard battery, DS1: first drive shaft (output member), DS2: second drive shaft (output member), E1: first housing chamber, E2: second housing chamber, ECU: control board, GT: power transmission mechanism, INV: inverter module, J: connecting shaft (output member), L: axial direction, L1: first axial side, MG: rotary electric machine, OC: oil cooler, PM: inverter circuit, PWR: power supply module, V: control valve, W: wheel, Z: up-down direction, Z1: upper side

## Claims

1. A vehicle drive device comprising:
a rotary electric machine including a rotor;
an output member drivingly connected to a wheel;
a power transmission mechanism configured to transmit a driving force between the rotary electric machine and the output member;
an inverter module configured to control drive of the rotary electric machine;
a power supply module electrically connected to an onboard battery;
a refrigerant circuit module that defines at least part of a refrigerant circuit through which a refrigerant for an onboard air conditioner circulates; and
a case including a first housing chamber that houses the inverter module and a second housing chamber that houses the rotary electric machine and the power transmission mechanism, wherein the power supply module and the refrigerant circuit module are attached to the case.

2. The vehicle drive device according to claim 1, wherein
the power supply module is disposed in a housing space inside the case, and
the refrigerant circuit module is disposed outside the case.

3. The vehicle drive device according to claim 1 or 2, wherein
assuming that an up-down direction is a direction along a vertical direction in an onboard state in which the vehicle drive device is mounted on a vehicle, and the up-down direction is used as a reference,
the first housing chamber is disposed on an upper side in the up-down direction with respect to the rotary electric machine, and
the refrigerant circuit module is disposed on the upper side in the up-down direction with respect to the first housing chamber.

4. The vehicle drive device according to claim 3, wherein
the first housing chamber is positioned to overlap the rotary electric machine in an up-down direction view along the up-down direction, and
the refrigerant circuit module is positioned to overlap the first housing chamber in the up-down direction view.

5. The vehicle drive device according to claim 1 or 2, wherein
assuming that an up-down direction is a direction along a vertical direction in an onboard state in which the vehicle drive device is mounted on a vehicle, and an axial direction is a direction along a rotation axis of the rotor,
the power transmission mechanism is disposed on a first axial side that is one side in the axial direction with respect to the rotor,
the inverter module is positioned to overlap the rotary electric machine in an up-down direction view along the up-down direction,
the power supply module is disposed to adjoin the inverter module on the first axial side, and
the refrigerant circuit module is disposed on an upper side in the up-down direction with respect to the inverter module and the power supply module, positioned to overlap the inverter module and the power supply module in the up-down direction view, and fixed integrally to the case.

6. The vehicle drive device according to claim 1 or 2, wherein
assuming that an up-down direction is a direction along a vertical direction in an onboard state in which the vehicle drive device is mounted on a vehicle, an axial direction is a direction along a rotation axis of the rotor, and a front-rear direction is a direction orthogonal to the axial direction in the up-down direction view,
the refrigerant circuit module is attached to an outer wall of the case at a position where the refrigerant circuit module overlaps an outer edge of the rotary electric machine on an upper side in the up-down direction in a front-rear direction view along the front-rear direction.

7. The vehicle drive device according to claim 1 or 2, wherein the refrigerant circuit module is positioned closer to a cabin unit of the onboard air conditioner than the first housing chamber and the second housing chamber in an onboard state.

8. The vehicle drive device according to claim 1 or 2, wherein
assuming that an up-down direction is a direction along a vertical direction in an onboard state in which the vehicle drive device is mounted on a vehicle,
a disposition position of the refrigerant circuit module in the up-down direction is closer to a disposition position of a cabin unit of the onboard air conditioner in the up-down direction than a disposition position of the first housing chamber in the up-down direction and a disposition position of the second housing chamber in the up-down direction.

9. The vehicle drive device according to claim 1 or 2, further comprising an oil cooler configured to cool oil stored in the second housing chamber, and a coolant circuit module that defines a coolant circuit through which a coolant circulates along a path extending through the oil cooler and an onboard radiator, wherein
the refrigerant circuit module includes a refrigerant channel component that defines a channel of the refrigerant in the refrigerant circuit, and a control valve attached to the refrigerant channel component, and
a refrigerant heat exchanger configured to exchange heat between the refrigerant and the coolant is further attached to the refrigerant channel component as a functional component constituting the refrigerant circuit.

10. The vehicle drive device according to claim 4, further comprising an oil cooler configured to cool oil stored in the second housing chamber, and a coolant circuit module that defines a coolant circuit through which a coolant circulates along a path extending through the oil cooler and an onboard radiator, wherein
the refrigerant circuit module includes a refrigerant channel component that defines a channel of the refrigerant in the refrigerant circuit, and a control valve attached to the refrigerant channel component,
a refrigerant heat exchanger configured to cool the refrigerant by exchanging heat between the refrigerant and the coolant is further attached to the refrigerant channel component as a functional component constituting the refrigerant circuit,
the refrigerant circuit includes a first channel area that is a channel of the refrigerant from the refrigerant heat exchanger to an onboard evaporator, and a second channel area that is a channel of the refrigerant from an onboard compressor to the refrigerant heat exchanger,
the first channel area is disposed so as to overlap the inverter module in the up-down direction view, and
the second channel area is disposed so as to overlap the power supply module in the up-down direction view.

11. The vehicle drive device according to claim 10, wherein
the refrigerant circuit further includes an accumulator configured to separate the refrigerant into liquid and gas, and
the refrigerant heat exchanger and the accumulator do not overlap the inverter module and the power supply module in the up-down direction view and a disposition area in the up-down direction is positioned to overlap the inverter module and the power supply module.

12. The vehicle drive device according to claim 4, wherein
the inverter module includes a switching element constituting an inverter circuit, and a cooling unit configured to cool the switching element,
the cooling unit includes a coolant channel through which a coolant flows,
the switching element is attached to an upper surface of the cooling unit, and
a control board configured to control the inverter circuit is disposed between the switching element and the refrigerant circuit module in the up-down direction.
